(19) Europäisches Patentamt
European Patent Office
Office européen des brevets

(11) **EP 4 224 601 A1**

(12) **EUROPEAN PATENT APPLICATION**
published in accordance with Art. 153(4) EPC

(43) Date of publication:
**09.08.2023 Bulletin 2023/32**

(21) Application number: **21875843.1**

(22) Date of filing: **30.09.2021**

(51) International Patent Classification (IPC):
***H01M 50/121*** (2021.01) ***B32B 27/36*** (2006.01)
***H01G 11/78*** (2013.01) ***H01G 11/84*** (2013.01)
***H01M 50/105*** (2021.01) ***H01M 50/129*** (2021.01)
***H01M 50/119*** (2021.01)

(52) Cooperative Patent Classification (CPC):
**B32B 27/36; H01G 11/78; H01G 11/84; H01M 50/105; H01M 50/121; H01M 50/129;**
H01M 50/119; Y02E 60/10

(86) International application number:
**PCT/JP2021/036342**

(87) International publication number:
**WO 2022/071547 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020166351**

(71) Applicant: **DAI NIPPON PRINTING CO., LTD.**
**Tokyo 162-8001 (JP)**

(72) Inventors:
- **HIRAKI, Kenta**
  **Tokyo 162-8001 (JP)**
- **NAKAMURA, Chihiro**
  **Tokyo 162-8001 (JP)**
- **SASAKI, Miho**
  **Tokyo 162-8001 (JP)**
- **TAKAHAGI, Atsuko**
  **Tokyo 162-8001 (JP)**

(74) Representative: **Müller-Boré & Partner Patentanwälte PartG mbB**
**Friedenheimer Brücke 21**
**80639 München (DE)**

(54) **EXTERIOR MATERIAL FOR POWER STORAGE DEVICES, METHOD FOR MANUFACTURING SAME, AND POWER STORAGE DEVICE**

(57) A power storage device packaging material comprising a laminate comprising at least a base material layer, a barrier layer, and a heat-sealable resin layer in this order, wherein the base material layer contains a polyester film, and the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less.

FIG. 1

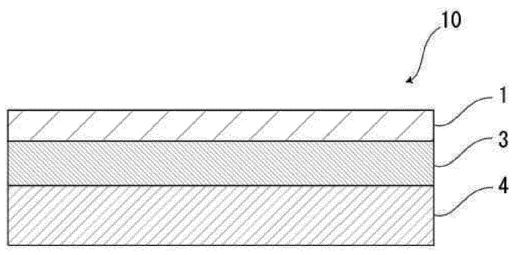




Processed by Luminess, 75001 PARIS (FR)

## Description

### Technical Field

The present disclosure relates to a power storage device packaging material, a method for producing the power storage device packaging material, and a power storage device.

### Background Art

Various types of power storage devices have been heretofore developed, and in every power storage device, an exterior material (packaging material) is an essential member for sealing a power storage device element including electrodes and an electrolyte. Metallic packaging materials have heretofore been widely used as power storage device packaging materials.

In recent years, along with improvements in the performance of electric cars, hybrid electric cars, personal computers, cameras, mobile phones, and the like, power storage devices have been required to have a variety of shapes and simultaneously, to be thinner and lighter weight. However, the widely used metallic power storage device packaging materials are disadvantageous in that they have difficulty in keeping up with the diversification of shapes, and are limited in weight reduction.

Thus, a film-shaped packaging material in which a base material/an aluminum foil layer/a heat-sealable resin layer are sequentially laminated has been proposed as a power storage device packaging material that can be readily processed into various shapes, and can achieve a thickness reduction and a weight reduction (see Patent Literature 1, for example).

In such a film-shaped packaging material, typically, a concave portion is formed by cold forming, a power storage device element including electrodes and an electrolytic solution is disposed in the space formed by the concave portion, and the heat-sealable resin layer is heat-sealed to another heat-sealable resin layer. This results in a power storage device in which the power storage device element is housed inside the packaging material.

### Citation List

### Patent Literature

Patent Literature 1: JP-A-2008-287971

### Summary of Invention

### Technical Problem

In the film-shaped packaging material, it is required that the concave portion for housing the power storage device element be formed deeply, from the viewpoint of further increasing the energy density of the power storage device, for example. Unfortunately, the film-shaped packaging material is susceptible to cracks or pinholes when it is molded to form the concave portion.

It is noted that a polyamide film or a polyester film, for example, is used as the base material layer of the film-shaped packaging material, and a polyamide film is preferred to improve the moldability of the packaging material.

However, compared to a polyester film, a polyamide film is inferior in mechanical strength and insulation properties, although it is superior in moldability. Thus, there is a need for a technology to improve the moldability of a power storage device packaging material, using a polyester film as the base material layer.

It is a main object of the present disclosure to provide a power storage device packaging material comprising a laminate comprising at least a base material layer containing a polyester film, a barrier layer, and a heat-sealable resin layer in this order, which power storage device packaging material has excellent moldability.

### Solution to Problem

The inventors of the present disclosure have conducted extensive research to solve the aforementioned problem. As a result, they have found that a power storage device packaging material comprising a laminate comprising at least a base material layer containing a polyester film, a barrier layer, and a heat-sealable resin layer in this order, wherein the polyester film is designed to have a work hardening exponent in the longitudinal and width directions in a specific range, with the difference between the work hardening exponents in the longitudinal and width directions in a specific range, an intrinsic viscosity in a specific range, and a rigid amorphous fraction in a specific range, exhibits

excellent moldability.

The present disclosure has been completed as a result of further research based on these findings. In summary, the present disclosure provides an embodiment of the invention as set forth below:

A power storage device packaging material comprising a laminate comprising at least a base material layer, a barrier layer, and a heat-sealable resin layer in this order,
wherein the base material layer contains a polyester film, and
the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less.

Advantageous Effects of Invention

The present disclosure can provide a power storage device packaging material comprising a laminate comprising at least a base material layer containing a polyester film, a barrier layer, and a heat-sealable resin layer in this order, which power storage device packaging material has excellent moldability. The present disclosure can also provide a method for producing the power storage device packaging material and a power storage device.

Brief Description of Drawings

Fig. 1 is a schematic diagram showing one exemplary cross-sectional structure of a power storage device packaging material of the present disclosure.
Fig. 2 is a schematic diagram showing one exemplary cross-sectional structure of a power storage device packaging material of the present disclosure.
Fig. 3 is a schematic diagram showing one exemplary cross-sectional structure of a power storage device packaging material of the present disclosure.
Fig. 4 is a schematic diagram showing one exemplary cross-sectional structure of a power storage device packaging material of the present disclosure.
Fig. 5 is a schematic diagram for illustrating a method of housing a power storage device element in a package formed of a power storage device packaging material of the present disclosure.

Description of Embodiments

A power storage device packaging material of the present disclosure comprises a laminate comprising at least a base material layer, a barrier layer, and a heat-sealable resin layer in this order, wherein the base material layer contains a polyester film, and the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less. Because of these features, the power storage device packaging material of the present disclosure has excellent moldability, although it includes the base material layer containing a polyester film.

The power storage device packaging material of the present disclosure will be hereinafter described in detail. In the present specification, any numerical range indicated by "... to ..." is intended to mean "... or more" and "... or less". For example, the recitation "2 to 15 mm" is intended to mean 2 mm or more and 15 mm or less.

In the power storage device packaging material, with respect to the below-described barrier layer, the machine direction (MD) and the transverse direction (TD) in the production process are usually distinguishable. For example, when the barrier layer is formed of a metal foil, such as an aluminum alloy foil or a stainless steel foil, linear streaks, which are so-called rolling marks, are formed on the surface of the metal foil in the rolling direction (RD) of the metal foil. Since the rolling marks extend along the rolling direction, the rolling direction of the metal foil can be ascertained by observing the surface of the metal foil. Moreover, since the MD of the laminate usually corresponds to the RD of the metal foil in the production process of the laminate, the MD of the laminate can be identified by identifying the rolling direction (RD) of the metal foil by observing the surface of the metal foil of the laminate. Furthermore, since the TD of the laminate is perpendicular to the MD of the laminate, the TD of the laminate can also be identified.

When the MD of the power storage device packaging material cannot be identified by the rolling marks of the metal foil, such as an aluminum alloy foil or a stainless steel foil, the MD can be identified using the following method. One method of examining the MD of the power storage device packaging material is to examine a sea-island structure

by observing cross sections of the heat-sealable resin layer of power storage device packaging material with an electron microscope. In this method, the MD can be determined as the direction parallel to a cross section having the maximum average diameter of island shapes in the direction perpendicular to the thickness direction of the heat-sealable resin layer. Specifically, a cross section in a length direction of the heat-sealable resin layer and cross sections (a total of 10 cross sections) from the direction parallel to the cross section in the length direction to the direction perpendicular to the cross section in the length direction as the angle is varied by 10 degrees from the direction parallel to the cross section in the length direction are each observed in an electron microscope photograph, and the sea-island structure is examined. Subsequently, for each cross section, the shape of each individual island is observed. In the shape of each individual island, the straight-line distance connecting the leftmost end in the direction perpendicular to the thickness direction of the heat-sealable resin layer and the rightmost end in the perpendicular direction is defined as the diameter y. For each cross section, the average of the top 20 diameters y in decreasing order of the diameter y of the island shape is calculated. The MD is determined as the direction parallel to a cross section having the greatest average of the diameter y of the island shape.

## 1. Laminated Structure of Power Storage Device Packaging Material

As shown in Fig. 1, for example, a power storage device packaging material 10 of the present disclosure comprises a laminate comprising a base material layer 1, a barrier layer 3, and a heat-sealable resin layer 4 in this order. In the power storage device packaging material 10, the base material layer 1 is the outermost layer, and the heat-sealable resin layer 4 is the innermost layer. At the time of assembly of a power storage device using the power storage device packaging material 10 and a power storage device element, the power storage device element is housed in a space formed by heat-sealing peripheral regions of the opposing heat-sealable resin layers 4 of the power storage device packaging material 10. In the laminate constituting the power storage device packaging material 10 of the present disclosure, using the barrier layer 3 as the reference, the heat-sealable resin layer 4 side relative to the barrier layer 3 is defined as the inner side, and the base material layer 1 side relative to the barrier layer 3 is defined as the outer side.

As shown in Figs. 2 to 4, for example, the power storage device packaging material 10 may optionally have an adhesive agent layer 2 between the base material layer 1 and the barrier layer 3, for the purpose of, for example, improving the adhesiveness between these layers. Moreover, as shown in Figs. 3 and 4, for example, the power storage device packaging material 10 may also optionally have an adhesive layer 5 between the barrier layer 3 and the heat-sealable resin layer 4, for the purpose of, for example, improving the adhesiveness between these layers. Furthermore, as shown in Fig. 4, a surface coating layer 6 or the like may be optionally provided on an outer side of the base material layer 1 (opposite to the heat-sealable resin layer 4 side).

While the thickness of the laminate constituting the power storage device packaging material 10 is not limited, it is preferably about 190 μm or less, about 155 μm or less, or about 120 μm or less, from the viewpoint of reducing costs or improving the energy density, for example. On the other hand, from the viewpoint of maintaining the function of the power storage device packaging material to protect the power storage device element, the thickness of the laminate constituting the power storage device packaging material 10 is preferably about 35 μm or more, about 45 μm or more, or about 60 μm or more. Preferred ranges of the thickness of the laminate constituting the power storage device packaging material 10 include from about 35 to 190 μm, from about 35 to 155 μm, from about 35 to 120 μm, from about 45 to 190 μm, from about 45 to 155 μm, from about 45 to 120 μm, from about 60 to 190 μm, from about 60 to 155 μm, and from about 60 to 120 μm, with the range of about 60 to 155 μm being particularly preferred.

In the power storage device packaging material 10, the ratio of the total thickness of the base material layer 1, the optional adhesive agent layer 2, the barrier layer 3, the optional adhesive layer 5, the heat-sealable resin layer 4, and the optional surface coating layer 6, relative to the thickness (entire thickness) of the laminate constituting the power storage device packaging material 10, is preferably 90% or more, more preferably 95% or more, and still more preferably 98% or more. As a specific example, when the power storage device packaging material 10 of the present disclosure includes the base material layer 1, the adhesive agent layer 2, the barrier layer 3, the adhesive layer 5, and the heat-sealable resin layer 4, the ratio of the total thickness of these layers relative to the thickness (entire thickness) of the laminate constituting the power storage device packaging material 10 is preferably 90% or more, more preferably 95% or more, and still more preferably 98% or more. When the power storage device packaging material 10 of the present disclosure is a laminate including the base material layer 1, the adhesive agent layer 2, the barrier layer 3, and the heat-sealable resin layer 4, the ratio of the total thickness of these layers relative to the thickness (entire thickness) of the laminate constituting the power storage device packaging material 10 may be, for example, 80% or more, preferably 90% or more, more preferably 95% or more, and still more preferably 98% or more.

2. Layers Forming Power Storage Device Packaging Material

[Base Material Layer 1]

In the present disclosure, the base material layer 1 is a layer that is provided for the purpose of, for example, functioning as a base material of the power storage device packaging material. The base material layer 1 is positioned on the outer layer side of the power storage device packaging material. The base material layer 1 may be the outermost layer (layer constituting the outer surface), or, when, for example, the below-described surface coating layer 6 is provided, the surface coating layer 6 may be the outermost layer (layer constituting the outer surface).

In the present disclosure, the base material layer 1 contains a polyester film, wherein the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less.

The polyester film contained in the base material layer 1 will be hereinafter described in detail.

In the present disclosure, the polyester film contained in the base material layer 1 has a work hardening exponent of 1.6 or more and 3.0 or less in both longitudinal and width directions. As used herein, the work hardening exponent is the value calculated from the stress at 5% elongation and the stress at 60% elongation, obtained by the tensile test as defined in the below-described evaluation method "(10) Work Hardening Exponent" in the Examples section.

The laminate used as the power storage device packaging material includes the base material layer, the barrier layer, and the heat-sealable resin layer, and the base material layer of these layers tends to be designed to have the smallest thickness. With respect to the stress applied in the thickness direction when drawing the power storage device packaging material, the neutral axis is determined according to the work hardened state of each layer, and the position in the thickness direction where the stress is concentrated is determined. When the work hardened state, i.e., the work hardening exponent, of the polyester film is less than 1.6, the neutral axis is biased toward the barrier layer and the heat-sealable resin layer, causing the stress to be unevenly applied to the barrier layer, which results in a break or pinhole in the barrier layer during drawing. Thus, the polyester film in the base material layer 1 of the present disclosure needs to have a work hardening exponent of at least 1.6. From the viewpoint of preventing the neutral axis from being biased toward the outermost layer, the work hardening exponent needs to be 3.0 or less in both the longitudinal and width directions.

To adjust the work hardening exponent of the polyester film in both the longitudinal and width directions to 1.6 or more and 3.0 or less, it is preferred to adjust, for example, the rupture strength of the film in the longitudinal and width directions to 200 MPa or more. As used herein, the width direction of the film is defined as the direction with the highest rupture strength of the rupture strengths measured in a given one direction (0°) of the film, and directions of 15°, 30°, 45°, 60°, 75°, 90°, 105°, 120°, 135°, 150°, and 165° from the direction, and the longitudinal direction of the film is defined as the direction perpendicular to the width direction.

To adjust the rupture strength of the polyester film to 200 MPa or more, the polyester film may be stretched at a high ratio during the production. Specifically, biaxial stretching is the most preferred, and may be sequential or simultaneous stretching using a known method, at an area stretch ratio of 11.0 or more. If the work hardening exponent is less than 1.6, the drawability is poor. On the other hand, the higher the work hardening exponent, the greater the elastic deformation by bending during drawing, and thus, warping after drawing tends to increase. It is thus important that the work hardening exponent be minimized according to the degree of warping required.

From the viewpoint of achieving the effect of the present invention more satisfactorily, the work hardening exponent of the polyester film is preferably 1.8 or more, and more preferably 2.0 or more. On the other hand, the work hardening exponent of the polyester film is preferably 2.9 or less. Preferred ranges of the work hardening exponent of the polyester film include from about 1.6 to 3.0, from about 1.6 to 2.9, from about 1.8 to 3.0, from about 1.8 to 2.9, from about 2.0 to 3.0, and from about 2.0 to 2.9.

In the present disclosure, the difference between the work hardening exponents in the longitudinal and width directions of the polyester film is 0.5 or less, from the viewpoint of in-plane uniformity. If the difference between the work hardening exponents in the longitudinal and width directions is above 0.5, the in-plane uniformity is poor, and the load is applied unevenly during drawing, which causes local deformation, resulting in poor drawability. The difference between the work hardening exponents is preferably 0.3 or less.

In the present disclosure, the polyester film preferably has a rupture elongation of 100% or more in at least one of the longitudinal and width directions. One of the deformation behaviors of a material during drawing is elongation. The greater the elongation of the film, the greater the factor of elongation deformation among the deformation behaviors, and hence, the higher the drawability. Thus, preferably, the rupture elongation in at least one of the longitudinal and width directions is 100% or more, and more preferably, the rupture elongations in both the longitudinal and width directions are 100% or more. The rupture elongations in the longitudinal and width directions can be adjusted to 100% or more by adjusting the stretch ratio in both directions to 4.0 or less. If there is a direction in which the stretch ratio is above 4.0,

even though this may be advantageous for increasing the work hardening exponent, the rupture elongation in that stretching direction may be 100% or less, and the drawability may decrease. The range of the rupture elongation in both the longitudinal and width directions of the polyester film is preferably about 110 to 150%. The rupture elongation of the polyester film is measured using the below-described evaluation method "(6) Rupture Elongation" in the Examples section.

In the present disclosure, the polyester film has a rigid amorphous fraction of 28% or more and 60% or less relative to the entire film. As used herein, the rigid amorphous fraction is the value measured using the below-described evaluation method "(8) Rigid Amorphous Fraction" in the Examples section. When the rigid amorphous fraction is in this range, particularly significant piercing resistance, which is a property in the thickness direction, can be achieved. Drawing of a power storage device packaging material typically involves fixing the four corners of the packaging material with a mold, and drawing the packaging material in the thickness direction. When the rigid amorphous fraction relative to the entire film is controlled in the above-defined range, excellent drawability is demonstrated in the drawing as described above. If the rigid amorphous fraction is above 60%, the amorphous component constitutes a large proportion of the film bulk composition, and the dimensional stability of the film is significantly reduced. On the other hand, if the rigid amorphous fraction is less than 28%, the piercing resistance, which is a property in the thickness direction, is poor.

From the viewpoint of achieving the effect of the present invention more satisfactorily, the rigid amorphous fraction of the polyester film is preferably 30% or more, and more preferably 35% or more. On the other hand, the rigid amorphous fraction of the polyester film is preferably 58% or less, more preferably 55% or less, and still more preferably 53% or less. Preferred ranges of the rigid amorphous fraction of the polyester film include from about 28 to 60%, from about 28 to 58%, from about 28 to 55%, from about 28 to 53%, from about 30 to 60%, from about 30 to 58%, from about 30 to 55%, from about 30 to 53%, from about 35 to 60%, from about 35 to 58%, from about 35 to 55%, and from about 35 to 53%.

The film bulk state is determined by the film-forming conditions in addition to the crystallinity of the raw material used. For example, when polyethylene terephthalate is used, one means to adjust the rigid amorphous fraction to 28% or more is, for example, adjusting the plane orientation coefficient fn of the film to 0.165 or more. As used herein, the plane orientation coefficient of the film is measured using the below-described evaluation method "(5) Plane Orientation Coefficient fn of Polyester Film" in the Examples section. One method of adjusting the plane orientation coefficient of the film to 0.165 or more is to adjust the area stretch ratio during biaxial stretching to 12.25 or more. In addition to this, the rigid amorphous fraction is preferably controlled by the heat treatment temperature after sequential biaxial stretching, and it is important that the highest temperature (heat treatment temperature) applied during the film formation be adjusted to 200°C or less. On the other hand, the rigid amorphous fraction tends to increase when the heat treatment temperature is 230°C or higher, because the resin begins to melt. However, this accelerates crystallization of the film with heat, and the below-described degree of crystallinity thus increases, resulting in a film bulk composition having a degree of crystallinity higher than the rigid amorphous. Thus, it is important that the heat treatment temperature be adjusted to 200°C or less. If the heat treatment temperature for the film is above 200°C and less than 230°C, the rigid amorphous may be less than 28%.

From the viewpoint of achieving the effect of the present invention more satisfactorily, the polyester film preferably has a degree of crystallinity of 15% or more and 40% or less. By controlling the degree of crystallinity through stretching-induced oriented crystallization or through crystallization with heat, the mechanical strength of the film can be increased. If the degree of crystallinity is less than 15%, the film plane orientation may be poor, and the work hardening exponent may not be controlled in the range of the present disclosure; whereas if the degree of crystallinity is above 40%, the rigid amorphous fraction may not fall in the range of the present disclosure. The degree of crystallinity can be adjusted in the range of 15% or more and 40% or less by, for example, using a homopolyester resin, adjusting the plane orientation coefficient of the film to 0.165 or more and 0.170 or less, and additionally, adjusting the heat treatment temperature to 150°C or more and 200°C or less. Other resins may also be blended. The degree of crystallinity of the polyester film is measured using the below-described evaluation method "(7) Degree of Crystallinity" in the Examples section.

From the viewpoint of achieving the effect of the present invention more satisfactorily, the degree of crystallinity of the polyester film is preferably 16% or more, more preferably 18% or more, and still more preferably 20% or more. On the other hand, the degree of crystallinity of the polyester film is preferably 39% or less, more preferably 35% or less, and still more preferably 32% or less. Preferred ranges of the degree of crystallinity of the polyester film include from about 15 to 40%, from about 15 to 39%, from about 15 to 35%, from about 15 to 32%, from about 16 to 40%, from about 16 to 39%, from about 16 to 35%, from about 16 to 32%, from about 18 to 40%, from about 18 to 39%, from about 18 to 35%, from about 18 to 32%, from about 20 to 40%, from about 20 to 39%, from about 20 to 35%, and from about 15 to 32%.

The polyester film has an intrinsic viscosity of 0.66 or more and 0.95 or less. As used herein, the intrinsic viscosity is the value measured using the below-described evaluation method "(4) Intrinsic Viscosity" in the Examples section. When the intrinsic viscosity is in this range, the entanglement of molecular chains increases, and resistance to deformation in the thickness direction, particularly piercing resistance, can be achieved. If the intrinsic viscosity is less

than 0.66, the entanglement of molecular chains is poor, and sufficient drawability cannot be achieved. On the other hand, if the intrinsic viscosity is above 0.95, the filtering pressure during melt film formation increases, and thus, the discharge rate needs to be reduced, resulting in poor productivity. The intrinsic viscosity can be adjusted with the raw material used for melt film formation. When the film desirably has a higher intrinsic viscosity, a raw material with a higher intrinsic viscosity may be used during film formation. In view of both productivity and the effect of entanglement of molecular chains, the intrinsic viscosity is preferably 0.69 or more and 0.88 or less.

From the viewpoint of achieving the effect of the present invention more satisfactorily, the polyester film preferably has a heat shrink ratio at 150°C of 3.5% or more and 14.0% or less in both the longitudinal and width directions. The heat shrink ratio at 150°C is preferably 3.5% or more, in order to reduce wrinkles during extrusion lamination when subjecting the polyester film used as the base material layer 1 to secondary processing with heating, for example, a lamination process in which heat at about 150°C is applied, such as an extrusion lamination process in which molten resin is directly laminated onto the film. On the other hand, if the heat shrink ratio at the temperature applied during lamination is above 14%, the film may undergo excessive deformation during lamination due to the heat shrinkage during lamination, possibly resulting in a defect. From the viewpoint of preventing wrinkles and the thermal deformation during lamination simultaneously, the heat shrink ratio at 150°C in the longitudinal and width directions of the polyester film is preferably 10% or less. The heat shrink ratio at 150°C in the longitudinal and width directions can be controlled to 3.5% or more and 14.0% or less, by adjusting the area ratio of the film to 12.25 or more, and additionally, performing the heat treatment at a heat treatment temperature of 160°C or more and 200°C or less. The heat shrink ratio at 150°C in the longitudinal and width directions of the polyester film is measured using the below-described evaluation method "(11) Heat Shrink Ratio at 150°C in Longitudinal and Width Directions of Polyester Film" in the Examples section.

From the viewpoint of achieving the effect of the present invention more satisfactorily, the polyester film preferably has a melting point (melting endothermic peak temperature (Tm)) of 235°C or more as measured using a differential scanning calorimeter. When the polyester film is used as the base material layer of a power storage device packaging material, the heat-sealable resin layer is heat-sealed to another heat-sealable resin layer to form the power storage device packaging material into a container. Thus, melting of the packaging material with the heat of heat sealing needs to be prevented. If the melting endothermic peak temperature Tm is less than 235°C, the heating temperature for heat-sealing needs to be lowered, which increases the time required to form the container by heat-sealing, possibly resulting in poor mass productivity. Most preferably, a homopolyester is used to have a melting endothermic peak temperature Tm of 235°C or more. From the viewpoint of the processability of the polyester film, the melting point is preferably 320°C or less. The melting point of the polyester film is measured using the below-described evaluation method "(9) Glass Transition Temperature Tg and Melting Point (Melting Endothermic Peak Temperature Tm)" in the Examples section.

From the viewpoint of achieving the effect of the present invention more satisfactorily, the melting point of the polyester film is preferably 238°C or more, more preferably 240°C or more, and still more preferably 245°C or more. On the other hand, the melting point of the polyester film is preferably 300°C or less, more preferably 290°C or less, and still more preferably 270°C or less. Preferred ranges of the melting point of the polyester film include from about 235 to 320°C, from about 235 to 300°C, from about 235 to 290°C, from about 235 to 270°C, from about 238 to 320°C, from about 238 to 300°C, from about 238 to 290°C, from about 238 to 270°C, from about 240 to 320°C, from about 240 to 300°C, from about 240 to 290°C, from about 240 to 270°C, from about 245 to 320°C, from about 245 to 300°C, from about 245 to 290°C, and from about 245 to 270°C.

The polyester film is composed of a polyester as a main component. The term "polyester" generically refers to a polymer compound having an ester bond as a primary bond in the main chain. The polyester can usually be obtained by the polycondensation reaction of a dicarboxylic acid or a derivative thereof and a diol or a derivative thereof. Electrolytic solution resistance can be achieved when the polyester film is composed of a polyester as a main component. As used herein, the phrase "composed of a polyester as a main component" means that the proportion of the polyester relative to the entire subject, which is herein the polyester film, is 60% by mass or more and 100% by mass or less. As used herein, a dicarboxylic acid unit (structural unit) or a diol unit (structural unit) refers to a divalent organic group from which the portion to be removed by polycondensation has been eliminated, and is represented by the following general formula:

dicarboxylic acid unit (structural unit): -CO-R-CO-
diol unit (structural unit): -O-R'-O-
wherein R and R' are each a divalent organic group, and may be the same or different.

Examples of diols or derivatives thereof that give polyesters include ethylene glycol, as well as aliphatic dihydroxy compounds, such as 1,2-propanediol, 1,3-propanediol, 1,3-butanediol, 1,4-butanediol, 1,5-pentanediol, 1,6-hexanediol, and neopentyl glycol; polyoxyalkylene glycols, such as diethylene glycol, polyethylene glycol, polypropylene glycol, and polytetramethylene glycol; alicyclic dihydroxy compounds, such as 1,4-cyclohexanedimethanol and spiroglycol; aromatic dihydroxy compounds, such as bisphenol A and bisphenol S; and derivatives thereof.

Examples of dicarboxylic acids or derivatives thereof that give polyesters include terephthalic acid, as well as

aromatic dicarboxylic acids, such as isophthalic acid, phthalic acid, 2,6-naphthalenedicarboxylic acid, diphenyldicarboxylic acid, diphenylsulfonedicarboxylic acid, diphenoxyethanedicarboxylic acid, and 5-sodiumsulfonedicarboxylic acid; aliphatic dicarboxylic acids, such as oxalic acid, succinic acid, adipic acid, sebacic acid, dimer acid, maleic acid, and fumaric acid; alicyclic dicarboxylic acids, such as 1,4-cyclohexanedicarboxylic acid; oxycarboxylic acids, such as paraoxybenzoic acid; and derivatives thereof. Examples of derivatives of dicarboxylic acids include esterified products, such as dimethyl terephthalate, diethyl terephthalate, terephthalic acid 2-hydroxyethyl methyl ester, dimethyl 2,6-naphthalenedicarboxylate, dimethyl isophthalate, dimethyl adipate, diethyl maleate, and dimethyl dimerate.

The polyester film may have a single-layer structure or a multilayer structure of two or more layers. In the case of a multilayer structure, the structure is preferably symmetrical with respect to the central layer, for example, layer B/layer A/layer B, from the viewpoint of preventing warping after the film is formed. If warping occurs after the film is formed, the handleability may deteriorate in a subsequent battery production process or the like. Alternatively, in the present disclosure, the polyester film may have a five-layer structure, for example, B/A/B/A/B. In the case of a multilayer structure, a three-layer laminated structure of B/A/B is preferred from the viewpoint of preventing warping after the film is formed. In the present disclosure, if the polyester film has a two-layer structure, for example, layer A/layer B, with different molecular orientations, warping may occur immediately after the film is formed. However, the polyester film may have an asymmetrical structure, for example, the two-layer structure of A/B, provided that it does not interfere with the effect of the present invention.

The polyester film preferably has a dynamic friction coefficient $\mu$d of 0.3 or less on a die-side contact surface, in order to improve drawability. When the dynamic friction coefficient is in the above-defined range, the deformation resistance during drawing decreases to improve processability. The dynamic friction coefficient of the polyester film is measured using the below-described evaluation method "(12) Dynamic Friction Coefficient of Polyester Film" in the Examples section. To adjust the dynamic friction coefficient to 0.3 or less, the polyester film preferably has an outermost layer that is, for example, a layer containing inorganic particles and/or organic particles with an average particle size of 0.005 $\mu$m or more and 10 $\mu$m or less at a content of 0.3% by mass or more and 5% by mass or less, although not limited thereto. The content is preferably 0.5% by mass or more and 3% by mass or less. However, excessive addition of the particles may reduce the rupture elongation of the packaging material. It is thus important that the particles be added so as not to interfere with the effect of the present invention. In the present disclosure, the particles have an average primary particle size of 0.005 $\mu$m or more. As used herein, the particle size represents the number average particle size, and refers to the particle diameter observed in a cross section of the film. When the shape is not a perfect circle, the value obtained by converting to a perfect circle with the same area is defined as the particle diameter. Number average particle size Dn can be herein determined using the following procedures (1) to (4):

(1) First, a cross section of the film is cut using a microtome so as not to crush the film in the thickness direction, and an enlarged observation image is obtained using a scanning electron microscope. Here, the cut is made parallel to the TD direction (transverse direction) of the film.

(2) Next, the cross-sectional area S is determined for each particle observed in the cross section in the image, and the particle size d is determined according to the following equation:

$$d = 2 \times (S/\pi)^{1/2}$$

(3) Using the particle size d and the number n of resin particles, Dn is determined according to the following equation:

$$Dn = \Sigma d/n$$

wherein $\Sigma$d is the total sum of the particle sizes of particles in the observation plane, and n is the total number of particles in the observation plane.

(4) The procedures (1) to (3) are performed for five different points, and the average value is defined as the number average particle size of the particles. The above-described evaluation is performed in a region of 2,500 $\mu m^2$ or more for every single observation point.

Examples of usable inorganic particles include wet-process silica and dry-process silica, colloidal silica, aluminum silicate, titanium oxide, calcium carbonate, calcium phosphate, barium sulfate, aluminum oxide, mica, kaolin, and clay. Examples of usable organic particles include particles containing styrene, silicone, acrylic acids, methacrylic acids, polyesters, divinyl compounds, and the like as components. Of these, it is preferred use inorganic particles such as wet-process silica or dry-process silica, alumina, or calcium carbonate, and particles containing styrene, silicone, acrylic acid, methacrylic acid, a polyester, or divinylbenzene as a component. These inorganic and organic particles

may be used in combination. To control the maximum surface height, the film surface is preferably subjected to texturing, such as embossing or sand blasting.

The thickness of the polyester film is preferably 9 μm or more and 30 μm or less, from the viewpoint of conformability during molding and of preventing warping after molding when the film is used as the base material layer of the power storage device packaging material. Most preferably, the thickness is 12 μm or more and 28 μm or less. While the thickness depends on the draw depth required, if the thickness is less than 9 μm, the moldability may be poor, whereas if the thickness is 30 μm or more, the rigidity increases, and warping may occur after molding.

A surface of the polyester film may be preferably subjected to a surface treatment, such as corona treatment, plasma treatment, ozone treatment, or formation of an anchor coat layer, in order to improve the adhesiveness to the adhesive layer. Examples of methods of forming the anchor coat layer include methods of coating a film surface with a resin (such as a composite melt extrusion method, a hot melt coating method, and an in-line or off-line coating method from a solvent other than water and a water-soluble and/or water-dispersible resin). Preferred among these methods is the in-line coating method, in terms of productivity and formation of a uniform film coating. This method involves applying a film coating preparation to one surface of the film before completion of oriented crystallization, stretching the film in at least one direction, and heat-treating the film to complete oriented crystallization. In the case of forming the anchor coat layer, examples of usable resins include, although not limited to, acrylic resins, urethane resins, polyester resins, olefin resins, fluororesins, vinyl resins, chlorine-based resins, styrene resins, various types of graft resins, epoxy resins, and silicone resins, as well as mixtures of these resins. From the viewpoint of adhesion, a polyester resin, an acrylic resin, or a urethane resin is preferably used. When a polyester resin is used as a water-based coating solution, it is a water-soluble or water-dispersible polyester resin. To solubilize or disperse this polyester resin in water, the polyester resin is preferably copolymerized with a compound containing a sulfonate group or a compound containing a carboxylate group. When an acrylic resin is used as a water-based coating solution, it needs be dissolved or dispersed in water, and a surfactant (examples include polyether compounds, although not limited thereto) may be used as an emulsifier. Moreover, in the anchor coat layer, the resin may be used together with any of various crosslinking agents to further improve the adhesiveness. Melamine, epoxy, and oxazoline resins are typically used as crosslinking resins.

In the present disclosure, the base material layer 1 may include at least one layer of the polyester film with the above-described properties, and may also include another layer. Material forming the other layer is not limited as long as it has the function as a base material, i.e., has at least insulation properties. The other layer may be formed using a resin, for example, and the resin may contain any of below-described additives.

The other layer may be a resin film formed of a resin, or may be formed by applying a resin, for example. The resin film may be an unstretched film or a stretched film. Examples of the stretched film include a uniaxially stretched film and a biaxially stretched film, with a biaxially stretched film being preferred. Examples of stretching methods for forming a biaxially stretched film include a sequential biaxial stretching method, an inflation method, and a simultaneous biaxial stretching method. Examples of methods of applying the resin include a roll coating method, a gravure coating method, and an extrusion coating method.

Examples of the resin forming the other layer include resins such as polyamides, polyolefins, epoxy resins, acrylic resins, fluororesins, polyurethanes, silicone resins, and phenol resins, as well as modified resins thereof. The resin forming the other layer may also be a copolymer of these resins or a modified copolymer thereof. The resin forming the other layer may also be a mixture of these resins.

Preferred among these resins as the resin forming the other layer is a polyamide. That is, when the base material layer 1 of the present disclosure further includes the other layer different from the polyester film, the base material layer 1 is preferably a laminate of the polyester film and a polyamide film.

Specific examples of polyamides include aliphatic polyamides, such as nylon 6, nylon 66, nylon 610, nylon 12, nylon 46, and copolymers of nylon 6 and nylon 66; polyamides containing aromatics, such as hexamethylenediamine-isophthalic acid-terephthalic acid copolyamides containing structural units derived from terephthalic acid and/or isophthalic acid, for example, nylon 61, nylon 6T, nylon 6IT, and nylon 6I6T (I denotes isophthalic acid, and T denotes terephthalic acid), and polyamide MXD6 (polymethaxylylene adipamide); cycloaliphatic polyamides, such as polyamide PACM6 (polybis(4-aminocyclohexyl)methane adipamide); polyamides copolymerized with a lactam component or an isocyanate component such as 4,4'-diphenylmethane-diisocyanate, and polyester amide copolymers or polyether ester amide copolymers that are copolymers of copolyamides with polyesters or polyalkylene ether glycols; and copolymers thereof. These polyamides may be used alone or in combination.

The polyamide film is preferably a stretched polyamide film, more preferably a stretched nylon film, and still more preferably a biaxially stretched nylon film.

When the base material layer 1 is composed of two or more layers, it may be a laminate in which films are laminated with an adhesive or the like, or may be a laminate of two or more layers of films formed by co-extruding resins. The laminate of two or more layers of resin films formed by co-extruding resins may be used in an unstretched state as the base material layer 1, or may be uniaxially or biaxially stretched and used as the base material layer 1.

When the base material layer 1 is a laminate of two or more layers of resin films, the polyester film is preferably

positioned as the outermost layer of the base material layer 1, because the polyester is resistant to discoloration when, for example, the electrolytic solution adheres to the surface.

When the base material layer 1 is a laminate of two or more layers of resin films, the two or more layers of resin films may be laminated with an adhesive therebetween. When the base material layer 1 is a laminate of two or more layers of resin films, at least one of the layers may have the major axis orientation as described above. Examples of preferred adhesives are the same adhesives as those mentioned for the adhesive agent layer 2 described below. The method of laminating two or more layers of resin films is not limited, and may be any of known methods, for example, a dry lamination method, a sandwich lamination method, an extrusion lamination method, and a thermal lamination method, preferably a dry lamination method. When the lamination is performed using a dry lamination method, a polyurethane adhesive is preferably used as an adhesive. In this case, the thickness of the adhesive is, for example, about 2 to 5 μm. An anchor coat layer may also be formed and laminated on the resin films used as the base material layer, as described for the polyester film. Examples of the anchor coat layer are the same adhesives as those mentioned for the adhesive agent layer 2 described below. In this case, the thickness of the anchor coat layer is, for example, about 0.01 to 1.0 μm.

At least one of the surface and the inside of the base material layer 1 may contain additives such as lubricants, flame retardants, anti-blocking agents, antioxidants, light stabilizers, tackifiers, and anti-static agents. A single additive may be used alone, or a mixture of two or more additives may be used.

In the present disclosure, a lubricant is preferably present on the surface of the base material layer 1, from the viewpoint of improving the moldability of the power storage device packaging material. While the lubricant is not limited, it is preferably an amide-based lubricant. Specific examples of amide-based lubricants include saturated fatty acid amides, unsaturated fatty acid amides, substituted amides, methylol amides, saturated fatty acid bis-amides, unsaturated fatty acid bis-amides, fatty acid ester amides, and aromatic bis-amides. Specific examples of saturated fatty acid amides include lauramide, palmitamide, stearamide, behenamide, and hydroxystearamide. Specific examples of unsaturated fatty acid amides include oleamide and erucamide. Specific examples of substituted amides include N-oleyl palmitamide, N-stearyl stearamide, N-stearyl oleamide, N-oleyl stearamide, and N-stearyl erucamide. Specific examples of methylol amides include methylol stearamide. Specific examples of saturated fatty acid bis-amides include methylene-bis-stearamide, ethylene-bis-capramide, ethylene-bis-lauramide, ethylene-bis-stearamide, ethylene-bis-hydroxystearamide, ethylene-bis-behenamide, hexamethylene-bis-stearamide, hexamethylene-bis-behenamide, hexamethylene hydroxystearamide, N,N'-distearyl adipamide, and N,N'-distearyl sebacamide Specific examples of unsaturated fatty acid bis-amides include ethylene-bis-oleamide, ethylene-bis-erucamide, hexamethylene-bis-oleamide, N,N'-dioleyl adipamide, and N,N'-dioleyl sebacamide. Specific examples of fatty acid ester amides include stearamide ethyl stearate. Specific examples of aromatic bis-amides include m-xylylene-bis-stearamide, m-xylylene-bis-hydroxystearamide, and N,N'-distearyl isophthalamide. These lubricants may be used alone or in combination.

When a lubricant is present on the surface of the base material layer 1, the amount of the lubricant present is not limited, but is preferably about 3 mg/$m^2$ or more, more preferably about 4 to 15 mg/$m^2$, and still more preferably about 5 to 14 mg/$m^2$.

The lubricant present on the surface of the base material layer 1 may be exuded from the lubricant contained in the resin constituting the base material layer 1, or may be applied to the surface of the base material layer 1.

While the thickness of the base material layer 1 is not limited as long as the function as a base material is exhibited, it is preferably about 10 μm or more, and more preferably about 15 μm or more, from the viewpoint of achieving the effect of the present invention more satisfactorily. From the same viewpoint, the thickness of the base material layer 1 is preferably about 60 μm or less, more preferably about 50 μm or less, still more preferably about 40 μm or less, even more preferably about 30 μm or less, still more preferably about 28 μm or less, and even more preferably about 25 μm or less. Preferred ranges of the thickness of the base material layer 1 include from about 10 to 60 μm, from about 10 to 50 μm, from about 10 to 40 μm, from about 10 to 30 μm, from about 10 to 28 μm, from about 10 to 25 μm, from about 15 to 60 μm, from about 15 to 50 μm, from about 15 to 40 μm, from about 15 to 30 μm, from about 15 to 28 μm, and from about 15 to 25 μm. When the base material layer 1 is a laminate of two or more layers of resin films, the thickness of the resin film constituting each layer is preferably about 2 to 25 μm.

[Adhesive Agent Layer 2]

In the power storage device packaging material of the present disclosure, the adhesive agent layer 2 is a layer that is optionally provided between the base material layer 1 and the barrier layer 3, for the purpose of improving the adhesiveness between these layers.

The adhesive agent layer 2 is formed of an adhesive capable of bonding the base material layer 1 and the barrier layer 3. While the adhesive used for forming the adhesive agent layer 2 is not limited, it may be any of a chemical reaction type, a solvent volatilization type, a heat melting type, a heat pressing type, and the like. The adhesive may also be a two-liquid curable adhesive (two-liquid adhesive), a one-liquid curable adhesive (one-liquid adhesive), or a

resin that does not involve a curing reaction. The adhesive agent layer 2 may be composed of a single layer or a plurality of layers.

Specific examples of adhesive components contained in the adhesive include polyesters, such as polyethylene terephthalate, polybutylene terephthalate, polyethylene naphthalate, polybutylene naphthalate, polyethylene isophthalate, and copolyesters; polyethers; polyurethanes; epoxy resins; phenol resins; polyamides, such as nylon 6, nylon 66, nylon 12, and copolyamides; polyolefin resins, such as polyolefins, cyclic polyolefins, acid-modified polyolefins, and acid-modified cyclic polyolefins; polyvinyl acetates; celluloses; (meth)acrylic resins; polyimides; polycarbonates; amino resins, such as urea resins and melamine resins; rubbers, such as chloroprene rubber, nitrile rubber, and styrene-butadiene rubber; and silicone resins. These adhesive components may be used alone or in combination. Preferred among these adhesive components is a polyurethane adhesive, for example. Moreover, the resin that serves as the adhesive component can be used in combination with an appropriate curing agent to improve the adhesive strength. The curing agent is appropriately selected from a polyisocyanate, a polyfunctional epoxy resin, an oxazoline group-containing polymer, a polyamine resin, an acid anhydride, and the like, according to the functional group of the adhesive component.

The polyurethane adhesive may be, for example, a polyurethane adhesive that contains a first agent containing a polyol compound and a second agent containing an isocyanate compound. The polyurethane adhesive is preferably a two-liquid curable polyurethane adhesive containing a polyol such as a polyester polyol, a polyether polyol, or an acrylic polyol as the first agent, and an aromatic or aliphatic polyisocyanate as the second agent. The polyurethane adhesive may also be, for example, a polyurethane adhesive that contains a polyurethane compound obtained by reacting a polyol compound and an isocyanate compound beforehand, and an isocyanate compound. The polyurethane adhesive may also be, for example, a polyurethane adhesive that contains a polyurethane compound obtained by reacting a polyol compound and an isocyanate compound beforehand, and a polyol compound. The polyurethane adhesive may also be, for example, a polyurethane adhesive produced by curing a polyurethane compound obtained by reacting a polyol compound and an isocyanate compound beforehand, by reacting with moisture such as moisture in the air. The polyol compound is preferably a polyester polyol having a hydroxy group at a side chain, in addition to the hydroxy groups at the ends of the repeating unit. Examples of the second agent include aliphatic, alicyclic, aromatic, and aromatic and aliphatic isocyanate compounds. Examples of isocyanate compounds include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples also include modified polyfunctional isocyanates obtained from one, or two or more of these diisocyanates. A multimer (for example, a trimer) may also be used as a polyisocyanate compound. Examples of such multimers include adducts, biurets, and isocyanurates. When the adhesive agent layer 2 is formed of a polyurethane adhesive, the power storage device packaging material is provided with excellent electrolytic solution resistance, which prevents the base material layer 1 from peeling off even if the electrolytic solution adheres to the side surface.

The adhesive agent layer 2 may be blended with other components as long as they do not interfere with adhesiveness, and may contain colorants, thermoplastic elastomers, tackifiers, fillers, and the like. When the adhesive agent layer 2 contains a colorant, the power storage device packaging material can be colored. The colorant may be any of known colorants, such as a pigment or a dye. A single colorant may be used, or a mixture of two or more colorants may be used.

The pigment is not limited in type as long as it does not interfere with the adhesiveness of the adhesive agent layer 2. Examples of organic pigments include azo-based, phthalocyanine-based, quinacridone-based, anthraquinone-based, dioxazine-based, indigo/thioindigo-based, perinone-perylene-based, isoindolenine-based, and benzimidazolone-based pigments. Examples of inorganic pigments include carbon black-based, titanium oxide-based, cadmium-based, lead-based, chromium oxide-based, and iron-based pigments. Other examples include mica powder and fish scale flakes.

Among these colorants, carbon black is preferred, in order to make the external appearance of the power storage device packaging material black, for example.

The average particle diameter of the pigment is not limited, and may be, for example, about 0.05 to 5 μm, and preferably about 0.08 to 2 μm. The average particle diameter of the pigment is the median diameter as measured with a laser diffraction/scattering particle size distribution analyzer.

The pigment content in the adhesive agent layer 2 is not limited as long as the power storage device packaging material is colored; for example, it is about 5 to 60% by mass, and preferably 10 to 40% by mass.

While the thickness of the adhesive agent layer 2 is not limited as long as the base material layer 1 and the barrier layer 3 can be bonded, it is, for example, about 1 μm or more or about 2 μm or more. On the other hand, the thickness of the adhesive agent layer 2 is, for example, about 10 μm or less or about 5 μm or less. Preferred ranges of the thickness of the adhesive agent layer 2 include from about 1 to 10 μm, from about 1 to 5 μm, from about 2 to 10 μm, and from about 2 to 5 μm.

[Coloring Layer]

A coloring layer (not illustrated) is a layer that is optionally provided between the base material layer 1 and the barrier layer 3. When the adhesive agent layer 2 is provided, the coloring layer may be provided between the base material layer 1 and the adhesive agent layer 2 or between the adhesive agent layer 2 and the barrier layer 3. Alternatively, the coloring layer may be provided on the outer side of the base material layer 1. The power storage device packaging material can be colored by providing the coloring layer.

The coloring layer can be formed, for example, by applying an ink containing a colorant to the surface of the base material layer 1 or the surface of the barrier layer 3. The colorant may be any of known colorants, such as a pigment or a dye. A single colorant may be used, or a mixture of two or more colorants may be used.

Specific examples of the colorant contained in the coloring layer are the same as those mentioned in the [Adhesive Agent Layer 2] section.

[Barrier Layer 3]

In the power storage device packaging material, the barrier layer 3 is a layer that at least prevents the ingress of moisture.

The barrier layer 3 may be, for example, a metal foil, a vapor-deposited film, or a resin layer having barrier properties. Examples of the vapor-deposited film include a vapor-deposited metal film, a vapor-deposited inorganic oxide film, and a vapor-deposited carbon-containing inorganic oxide film. Examples of the resin layer include fluorine-containing resins, such as polyvinylidene chloride, polymers containing chlorotrifluoroethylene (CTFE) as a main component, polymers containing tetrafluoroethylene (TFE) as a main component, polymers with fluoroalkyl groups, and polymers with fluoroalkyl units as a main component; and ethylene-vinyl alcohol copolymers. The barrier layer 3 may also be, for example, a resin film having at least one of these vapor-deposited films and resin layers. A plurality of barrier layers 3 may be provided. The barrier layer 3 preferably includes a layer formed of a metal material. Specific examples of metal materials constituting the barrier layer 3 include aluminum alloys, stainless steel, titanium steel, and steel. When the barrier layer 3 is a metal foil, it preferably contains at least one of an aluminum alloy foil and a stainless steel foil.

The aluminum alloy foil is more preferably a soft aluminum alloy foil formed of an annealed aluminum alloy, for example, from the viewpoint of improving the moldability of the power storage device packaging material, and is more preferably an aluminum alloy foil containing iron, from the viewpoint of further improving the moldability. In the aluminum alloy foil (100% by mass) containing iron, the iron content is preferably 0.1 to 9.0% by mass, and more preferably 0.5 to 2.0% by mass. When the iron content is 0.1% by mass or more, the power storage device packaging material can be provided with superior moldability. When the iron content is 9.0% by mass or less, the power storage device packaging material can be provided with superior flexibility. Examples of soft aluminum alloy foils include aluminum alloy foils having the compositions as specified in JIS H4160: 1994 A8021 H-O, JIS H4160: 1994 A8079 H-O, JIS H4000: 2014 A8021 P-O, and JIS H4000: 2014 A8079 P-O. These aluminum alloy foils may be optionally blended with silicon, magnesium, copper, manganese, and the like. The softening may be performed by annealing, for example.

Examples of the stainless steel foil include austenitic, ferritic, austenitic-ferritic, martensitic, and precipitation-hardening stainless steel foils. The stainless steel foil is preferably formed of an austenitic stainless steel, from the viewpoint of providing the power storage device packaging material with superior moldability.

Specific examples of the austenitic stainless steel constituting the stainless steel foil include SUS304, SUS301, and SUS316L, with SUS304 being particularly preferred.

The barrier layer 3 when it is a metal foil may have a thickness sufficient to exhibit at least the function of the barrier layer to prevent the ingress of moisture, and may have a thickness of, for example, about 9 to 200 μm. The thickness of the barrier layer 3 is preferably about 100 μm or less, and more preferably about 85 μm or less. On the other hand, the thickness of the barrier layer 3 is preferably about 25 μm or more, and more preferably about 30 μm or more. Preferred ranges of the thickness of the barrier layer 3 include from about 25 to 100 μm, from about 25 to 85 μm, from about 30 to 100 μm, and from about 30 to 85 μm. When the barrier layer 3 is formed of an aluminum alloy foil, the above-defined ranges are particularly preferred. In particular, when the barrier layer 3 is formed of a stainless steel foil, the thickness of the stainless steel foil is preferably about 60 μm or less, more preferably about 50 μm or less, still more preferably about 40 μm or less, even more preferably about 30 μm or less, and particularly preferably about 25 μm or less. On the other hand, the thickness of the stainless steel foil is preferably about 10 μm or more, and more preferably about 15 μm or more. Preferred ranges of the thickness of the stainless steel foil include from about 10 to 60 μm, from about 10 to 50 μm, from about 10 to 40 μm, from about 10 to 30 μm, from about 10 to 25 μm, from about 15 to 60 μm, from about 15 to 50 μm, from about 15 to 40 μm, from about 15 to 30 μm, and from about 15 to 25 μm.

When the barrier layer 3 is a metal foil, the barrier layer 3 preferably has a corrosion-resistant film at least on a surface opposite to the base material layer, in order to prevent dissolution or corrosion, for example. The barrier layer 3 may have corrosion-resistant films on both surfaces. As used herein, the term "corrosion-resistant film" refers to, for

example, a thin film that imparts corrosion resistance (for example, acid resistance and alkali resistance) to the barrier layer, and is formed by subjecting a surface of the barrier layer to, for example, hydrothermal conversion treatment such as boehmite treatment, chemical conversion treatment, anodic oxidation treatment, plating treatment with nickel, chromium, or the like, or anti-corrosion treatment of applying a coating preparation. Specifically, "corrosion-resistant film" means a film for improving the acid resistance of the barrier layer (acid-resistant film), a film for improving the alkali resistance of the barrier layer (alkali-resistant film), and the like. The treatments for forming the corrosion-resistant film may be performed alone or in combination. The corrosion-resistant film may be composed of a plurality of layers instead of a single layer. Among these treatments, the hydrothermal conversion treatment and the anodic oxidation treatment are treatments in which the surface of the metal foil is dissolved with a treatment agent to form a metal compound with excellent corrosion resistance. These treatments may be included in the definition of the chemical conversion treatment. When the barrier layer 3 has a corrosion-resistant film, the corrosion-resistant film is defined as being included in the barrier layer 3.

The corrosion-resistant film exhibits the effect of preventing delamination between the barrier layer (for example, an aluminum alloy foil) and the base material layer during molding of the power storage device packaging material, preventing dissolution or corrosion of the barrier layer surface, particularly dissolution or corrosion of aluminum oxide present on the barrier layer surface when the barrier layer is an aluminum alloy foil, due to hydrogen fluoride produced by the reaction between the electrolyte and moisture, and improving the adhesiveness (wettability) of the barrier layer surface to prevent delamination between the base material layer and the barrier layer during heat-sealing, and prevent delamination between the base material layer and the barrier layer during molding.

Various corrosion-resistant films formed by the chemical conversion treatment are known, and typical examples include a corrosion-resistant film containing at least one of phosphates, chromates, fluorides, triazine-thiol compounds, and rare earth oxides. Examples of the chemical conversion treatment using phosphates and chromates include chromic acid chromate treatment, phosphoric acid chromate treatment, phosphate-chromate treatment, and chromate treatment. Examples of chromium compounds used in these treatments include chromium nitrate, chromium fluoride, chromium sulfate, chromium acetate, chromium oxalate, chromium biphosphate, acetylacetate chromate, chromium chloride, and chromium potassium sulfate. Examples of phosphorus compounds used in these treatments include sodium phosphate, potassium phosphate, ammonium phosphate, and polyphosphoric acid. Moreover, examples of chromate treatment include etching chromate treatment, electrolytic chromate treatment, and coating-type chromate treatment, with coating-type chromate treatment being preferred. Coating-type chromate treatment is performed as follows: Initially, at least the inner layer-side surface of the barrier layer (for example, an aluminum alloy foil) is subjected to degreasing treatment, using a well-known treatment method such as an alkali immersion method, an electrolytic cleaning method, an acid cleaning method, an electrolytic acid cleaning method, or an acid activation method. Then, a treatment solution containing, as a main component, a phosphoric acid metal salt such as Cr (chromium) phosphate, Ti (titanium) phosphate, Zr (zirconium) phosphate, or Zn (zinc) phosphate, or a mixture of these metal salts, or a treatment solution containing, as a main component, a phosphoric acid non-metal salt or a mixture of such non-metal salts, or a treatment solution containing a mixture of any of the above with a synthetic resin or the like, is applied to the degreasing treatment surface, using a well-known coating method such as a roll coating method, a gravure printing method, or an immersion method, and dried. The treatment solution may be formed using any of various solvents, such as, for example, water, alcohol solvents, hydrocarbon solvents, ketone solvents, ester solvents, and ether solvents, with water being preferred. The resin component to be used here may be, for example, a polymer such as a phenolic resin or an acrylic resin, and chromate treatment using an aminated phenol polymer having any of the repeating units represented by general formulae (1) to (4) shown below may be employed, for example. The aminated phenol polymer may contain one of or any combination of two or more of the repeating units represented by general formulae (1) to (4). The acrylic resin is preferably polyacrylic acid, an acrylic acid-methacrylic acid ester copolymer, an acrylic acid-maleic acid copolymer, an acrylic acid-styrene copolymer, or a derivative thereof, such as a sodium, ammonium, or amine salt. In particular, the acrylic resin is preferably a derivative of polyacrylic acid, such as an ammonium, sodium, or amine salt of polyacrylic acid. As used herein, the term "polyacrylic acid" refers to a polymer of acrylic acid. Alternatively, the acrylic resin is preferably a copolymer of acrylic acid with a dicarboxylic acid or a dicarboxylic anhydride, or preferably an ammonium, sodium, or amine salt of the copolymer of acrylic acid with a dicarboxylic acid or a dicarboxylic anhydride. A single acrylic resin may be used alone, or a mixture of two or more of acrylic resins may be used.

[Formula 1]

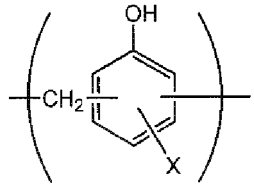

(1)

[Formula 2]

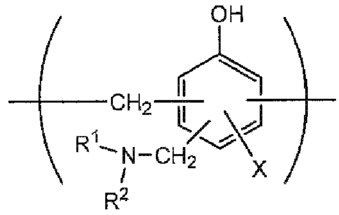

(2)

[Formula 3]

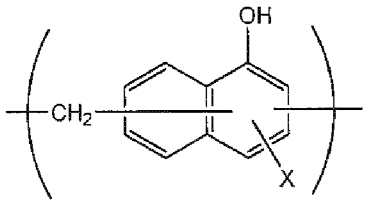

(3)

[Formula 4]

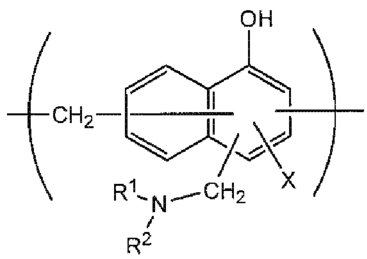

(4)

In general formulae (1) to (4), X represents a hydrogen atom, a hydroxy group, an alkyl group, a hydroxyalkyl group, an allyl group, or a benzyl group. $R^1$ and $R^2$ are the same or different, and each represent a hydroxy group, an alkyl group, or a hydroxyalkyl group. In general formulae (1) to (4), examples of alkyl groups represented by X, $R^1$, and $R^2$ include linear or branched alkyl groups with 1 to 4 carbon atoms, such as methyl, ethyl, n-propyl, isopropyl, n-butyl, isobutyl, and tert-butyl groups. Examples of hydroxyalkyl groups represented by X, $R^1$, and $R^2$ include linear or branched alkyl groups with 1 to 4 carbon atoms, which are substituted with one hydroxy group, such as a hydroxymethyl, 1-hydroxyethyl, 2-hydroxyethyl, 1-hydroxypropyl, 2-hydroxypropyl, 3-hydroxypropyl, 1-hydroxybutyl, 2-hydroxybutyl, 3-hydroxybutyl, or 4-hydroxybutyl group. In general formulae (1) to (4), the alkyl groups and the hydroxyalkyl groups represented by X, $R^1$, and $R^2$ may be the same or different. In general formulae (1) to (4), X is preferably a hydrogen atom, a hydroxy group, or a hydroxyalkyl group. The number average molecular weight of the aminated phenol polymer having any of the repeating units represented by general formulae (1) to (4) is, for example, about 500 to 1,000,000, preferably about 1,000 to 20,000. The aminated phenol polymer is produced, for example, by polycondensing a phenol compound or a naphthol compound with formaldehyde to produce a polymer composed of the repeating unit represented by general formula (1) or (3) above, and then introducing a functional group ($-CH_2NR^1R^2$) into the polymer obtained above using formaldehyde and an amine ($R^1R^2NH$). A single aminated phenol polymer may be used alone, or a mixture of two or more aminated phenol polymers may be used.

Other examples of the corrosion-resistant film include a thin film formed by coating-type anti-corrosion treatment in which a coating preparation containing at least one selected from the group consisting of a rare earth element oxide sol, an anionic polymer, and a cationic polymer is applied. The coating preparation may also contain phosphoric acid or a phosphate and a crosslinking agent that crosslinks the polymer. In the rare earth element oxide sol, fine particles of a rare earth element oxide (for example, particles with an average particle diameter of 100 nm or less) are dispersed in a liquid dispersion medium. Examples of the rare earth element oxide include cerium oxide, yttrium oxide, neodymium oxide, and lanthanum oxide, with cerium oxide being preferred from the viewpoint of further improving the adhesion. A single rare earth element oxide or a combination of two or more rare earth element oxides may be contained in the corrosion-resistant film. The liquid dispersion medium of the rare earth element oxide sol may be any of various solvents, such as, for example, water, alcohol solvents, hydrocarbon solvents, ketone solvents, ester solvents, and ether solvents, with water being preferred. Examples of the cationic polymer include polyethyleneimine, ion polymer complexes composed of polymers containing polyethyleneimine and carboxylic acids, primary amine-grafted acrylic resins obtained by grafting primary amines to an acrylic backbone, polyallylamine or derivatives thereof, and aminated phenols. The anionic polymer is preferably a copolymer that contains, as a main component, poly(meth)acrylic acid or a salt thereof, or (meth)acrylic acid or a salt thereof. The crosslinking agent is preferably at least one selected from the group consisting of compounds with any of an isocyanate group, a glycidyl group, a carboxyl group, and an oxazoline group as a functional group, and silane coupling agents. The phosphoric acid or phosphate is preferably condensed phosphoric acid or a condensed phosphate.

One exemplary corrosion-resistant film is formed by coating the surface of the barrier layer with a dispersion in phosphoric acid of fine particles of a metal oxide, such as aluminum oxide, titanium oxide, cerium oxide, or tin oxide, or barium sulfate, and baking at 150°C or more.

The corrosion-resistant film may optionally have a laminated structure in which at least one of a cationic polymer and an anionic polymer is additionally laminated. Examples of the cationic polymer and the anionic polymer are those as mentioned above.

The composition of the corrosion-resistant film can be analyzed using, for example, time-of-flight secondary ion mass spectrometry.

While the amount of the corrosion-resistant film to be formed on the surface of the barrier layer 3 by the chemical conversion treatment is not limited, in the case of employing, for example, coating-type chromate treatment, it is preferred that the chromic acid compound be contained in an amount of about 0.5 to 50 mg, for example, preferably about 1.0 to 40 mg, calculated as chromium, the phosphorus compound be contained in an amount of about 0.5 to 50 mg, for example, preferably about 1.0 to 40 mg, calculated as phosphorus, and the aminated phenol polymer be contained in an amount of about 1.0 to 200 mg, for example, preferably about 5.0 to 150 mg, per $m^2$ of the surface of the barrier layer 3.

While the thickness of the corrosion-resistant film is not limited, it is preferably about 1 nm to 20 $\mu$m, more preferably about 1 to 100 nm, and still more preferably about 1 to 50 nm, from the viewpoint of the cohesive force of the film, and the adhesion force between the barrier layer and the heat-sealable resin layer. The thickness of the corrosion-resistant film can be measured by observation with a transmission electron microscope, or a combination of observation with a transmission electron microscope and energy dispersive X-ray spectroscopy or electron energy loss spectroscopy. As a result of the analysis of the composition of the corrosion-resistant film using time-of-flight secondary ion mass spectrometry, a peak derived from, for example, secondary ions of Ce, P, and O (for example, at least one of $Ce_2PO_4^+$, $CePO_4^-$, and the like) or a peak derived from, for example, secondary ions of Cr, P, and O (for example, at least one of $CrPO_2^+$, $CrPO_4^-$, and the like) is detected.

The chemical conversion treatment is performed by applying the solution containing the compound to be used for forming the corrosion-resistant film to a surface of the barrier layer, using a bar coating method, a roll coating method, a gravure coating method, an immersion method, or the like, followed by heating such that the temperature of the barrier layer is increased to about 70 to 200°C. Before the barrier layer is subjected to the chemical conversion treatment, the barrier layer may be subjected to the degreasing treatment using an alkali immersion method, an electrolytic cleaning method, an acid cleaning method, an electrolytic acid cleaning method, or the like. The degreasing treatment allows the chemical conversion treatment of the surface of the barrier layer to be more efficiently performed. Alternatively, by using an acid degreasing agent in which a fluorine-containing compound is dissolved in an inorganic acid in the degreasing treatment, it is possible to achieve not only the effect of degreasing the metal foil, but also to form a passive metal fluoride. In this case, only the degreasing treatment may be performed.

[Heat-Sealable Resin Layer 4]

In the power storage device packaging material of the present disclosure, the heat-sealable resin layer 4 corresponds to the innermost layer, and is a layer (sealant layer) that is heat-sealed to another heat-sealable resin layer during the assembly of a power storage device to exhibit the function of hermetically sealing the power storage device element.

While the resin constituting the heat-sealable resin layer 4 is not limited as long as it is heat-sealable, examples include polyolefins such as homo- or block-type polypropylene, resins containing a polyolefin backbone such as cyclic polyolefins, polyesters such as polyethylene terephthalate and polybutylene terephthalate, polyacetals, acrylic resins, polymethylpentene and copolymers thereof with α-olefins, nylon 6, nylon 66, polyvinylidene chloride, polyphenylene sulfide, acetyl cellulose, fluororesins such as ETFE, PCTFE, PFA, and FEP, as well as resins obtained by modifying these resins with maleic anhydride or acrylic acid (such as acid-modified polyolefins). These resins may be used alone or in combination. The inclusion of the polyolefin backbone in the resin constituting the heat-sealable resin layer 4 can be analyzed by, for example, infrared spectroscopy or gas chromatography-mass spectrometry. It is also preferred that when the resin constituting the heat-sealable resin layer 4 is analyzed by infrared spectroscopy, a peak derived from maleic anhydride be detected. For example, when a maleic anhydride-modified polyolefin is measured by infrared spectroscopy, peaks derived from maleic anhydride are detected at a wavelength near 1760 $cm^{-1}$ and a wavelength near 1780 $cm^{-1}$. When the heat-sealable resin layer 4 is a layer formed of a maleic anhydride-modified polyolefin, the peaks derived from maleic anhydride are detected in infrared spectroscopic measurement. However, if the degree of acid modification is low, the peaks may be so small that they cannot be detected. In that case, the analysis can be performed by nuclear magnetic resonance spectroscopy.

Specific examples of the polyolefin include polyethylenes, such as low-density polyethylene, medium-density polyethylene, high-density polyethylene, and linear low-density polyethylene; ethylene-α-olefin copolymers; polypropylenes, such as homopolypropylene, block copolymers of polypropylene (for example, block copolymers of propylene and ethylene), and random copolymers of polypropylene (for example, random copolymers of propylene and ethylene); propylene-α-olefin copolymers; and terpolymers of ethylene-butene-propylene. Among the above, polypropylenes are preferred. When the polyolefin resin is a copolymer, it may be a block copolymer or a random copolymer. These polyolefin resins may be used alone or in combination.

The polyolefin may also be a cyclic polyolefin. The cyclic polyolefin is a copolymer of an olefin with a cyclic monomer. Examples of the olefin as a constituent monomer of the cyclic polyolefin include ethylene, propylene, 4-methyl-1-pentene, styrene, butadiene, and isoprene. Examples of the cyclic monomer as a constituent monomer of the cyclic polyolefin include cyclic alkenes, such as norbornene; and cyclic dienes, such as cyclopentadiene, dicyclopentadiene, cyclohexadiene, and norbornadiene. Among the above, cyclic alkenes are preferred, and norbornene is more preferred.

The acid-modified polyolefin is a polymer obtained by modifying the polyolefin by block polymerization or graft polymerization with an acid component. The polyolefin to be acid-modified may, for example, be the above-mentioned polyolefin, or a copolymer obtained by copolymerizing the above-mentioned polyolefin with a polar molecule, such as acrylic acid or methacrylic acid, or a polymer such as a crosslinked polyolefin. Examples of the acid component to be used for the acid modification include carboxylic acids and anhydrides thereof, such as maleic acid, acrylic acid, itaconic acid, crotonic acid, maleic anhydride, and itaconic anhydride.

The acid-modified polyolefin may also be an acid-modified cyclic polyolefin. The acid-modified cyclic polyolefin is a polymer obtained by replacing a portion of the monomers constituting the cyclic polyolefin with an acid component, and copolymerizing them, or by block-polymerizing or graft-polymerizing an acid component onto the cyclic polyolefin. The cyclic polyolefin to be acid-modified is the same as described above. The acid component used for the acid modification is the same as that used for the modification of the above-mentioned polyolefin.

Examples of preferred acid-modified polyolefins include polyolefins modified with carboxylic acids or anhydrides thereof, polypropylenes modified with carboxylic acids or anhydrides thereof, maleic anhydride-modified polyolefins, and maleic anhydride-modified polypropylenes.

Among the above-mentioned resins, when the heat-sealable resin layer 4 is formed of a maleic anhydride-modified resin of a block-type polypropylene, a maleic anhydride-modified resin of polymethylpentene or a copolymer thereof with an α-olefin, a maleic anhydride-modified resin of a cyclic polyolefin, a fluororesin such as ETFE, PCTFE, PFA, or FEP, polyethylene terephthalate, polybutylene terephthalate, or the like, the power storage device packaging material 10 of the present disclosure can exhibit high sealing strength in a high-temperature environment when it is used in applications requiring heat resistance, such as batteries used at high temperatures (for example, 80°C or more). Polyethylene terephthalate or polybutylene terephthalate may be stretched or unstretched, and may also contain an elastomer.

A polybutylene terephthalate film preferably further contains an elastomer in addition to polybutylene terephthalate. The elastomer plays the role of increasing the flexibility of the polybutylene terephthalate film while ensuring durability in a high-temperature environment. Preferably, the elastomer is, for example, at least one thermoplastic elastomer selected from polyesters, polyamides, polyurethanes, polyolefins, polystyrenes, polyethers, and acrylics, or a thermoplastic elastomer that is a copolymer thereof. More preferably, the elastomer is, for example, a thermoplastic elastomer formed of a block copolymer of polybutylene terephthalate with a polyether or a thermoplastic elastomer formed of an α-olefin copolymer of polymethylpentene. The elastomer content in the heat-sealable resin layer 4 is not limited as long as the flexibility can be increased while ensuring excellent heat resistance and sealability of the heat-sealable resin layer 4; for example, it is about 0.1% by mass or more, preferably about 0.5% by mass or more, more

preferably about 1.0% by mass or more, and still more preferably about 3.0% by mass or more. On the other hand, the elastomer content is, for example, about 10.0% by mass or less, about 8.0% by mass or less, or about 5.0% by mass or less. Preferred ranges of the elastomer content include from about 0.1 to 10.0% by mass, from about 0.1 to 8.0% by mass, from about 0.1 to 5.0% by mass, from about 0.5 to 10.0% by mass, from about 0.5 to 8.0% by mass, from about 0.5 to 5.0% by mass, from about 1.0 to 10.0% by mass, from about 1.0 to 8.0% by mass, from about 1.0 to 5.0% by mass, from about 3.0 to 10.0% by mass, from about 3.0 to 8.0% by mass, and from about 3.0 to 5.0% by mass.

The heat-sealable resin layer 4 may be formed of a single resin alone, or may be formed of a blend polymer obtained by combining two or more resins. Furthermore, the heat-sealable resin layer 4 may be formed of only one layer, or may be formed of two or more layers using an identical resin or different resins.

The heat-sealable resin layer 4 may also optionally contain a lubricant and the like. The inclusion of a lubricant in the heat-sealable resin layer 4 can improve the moldability of the power storage device packaging material. The lubricant is not limited, and may be a known lubricant. Such lubricants may be used alone or in combination.

While the lubricant is not limited, it is preferably an amide-based lubricant. Specific examples of the lubricant are those mentioned for the base material layer 1. Such lubricants may be used alone or in combination.

When a lubricant is present on the surface of the heat-sealable resin layer 4, the amount of the lubricant present is not limited, but is preferably about 10 to 50 $mg/m^2$, and more preferably about 15 to 40 $mg/m^2$, from the viewpoint of improving the moldability of the power storage device packaging material.

The lubricant present on the surface of the heat-sealable resin layer 4 may be exuded from the lubricant contained in the resin constituting the heat-sealable resin layer 4, or may be applied to the surface of the heat-sealable resin layer 4.

The thickness of the heat-sealable resin layer 4 is not limited as long as the heat-sealable resin layer is heat-sealed to another heat-sealable resin layer to exhibit the function of hermetically sealing the power storage device element; for example, it is about 100 μm or less, preferably about 85 μm or less, and more preferably about 15 to 85 μm. For example, when the thickness of the below-described adhesive layer 5 is 10 μm or more, the thickness of the heat-sealable resin layer 4 is preferably about 85 μm or less, and more preferably about 15 to 45 μm. For example, when the thickness of the below-described adhesive layer 5 is less than 10 μm, or when the adhesive layer 5 is not provided, the thickness of the heat-sealable resin layer 4 is preferably about 20 μm or more, and more preferably about 35 to 85 μm.

[Adhesive Layer 5]

In the power storage device packaging material of the present disclosure, the adhesive layer 5 is a layer that is optionally provided between the heat-sealable resin layer 4 and the barrier layer 3 (or the corrosion-resistant film), in order to strongly bond these layers.

The adhesive layer 5 is formed of a resin capable of bonding the barrier layer 3 and the heat-sealable resin layer 4. Examples of the resin to be used for forming the adhesive layer 5 may include the same adhesives as those mentioned for the adhesive agent layer 2. From the viewpoint of strongly bonding the adhesive layer 5 to the heat-sealable resin layer 4, the resin to be used for forming the adhesive layer 5 preferably contains a polyolefin backbone, and examples of the resin include the polyolefins and the acid-modified polyolefins as mentioned for the heat-sealable resin layer 4 described above. On the other hand, from the viewpoint of strongly bonding the adhesive layer 5 to the barrier layer 3, the adhesive layer 5 preferably contains an acid-modified polyolefin. Examples of the acid-modification component include dicarboxylic acids, such as maleic acid, itaconic acid, succinic acid, and adipic acid, or anhydrides thereof, acrylic acid, and methacrylic acid, with maleic anhydride being most preferred in view of ease of modification and versatility. From the viewpoint of the heat resistance of the power storage device packaging material, the olefin component is preferably a polypropylene resin, and the adhesive layer 5 most preferably contains maleic anhydride-modified polypropylene.

The inclusion of the polyolefin backbone in the resin constituting the adhesive layer 5 can be analyzed by, for example, infrared spectroscopy or gas chromatography-mass spectrometry, although the analytical method is not limited thereto. The inclusion of an acid-modified polyolefin in the resin constituting the adhesive layer 5 can be analyzed, for example, as follows. When, for example, a maleic anhydride-modified polyolefin is measured by infrared spectroscopy, peaks derived from maleic anhydride are detected at a wavelength near 1760 $cm^{-1}$ and a wavelength near 1780 $cm^{-1}$. However, if the degree of acid modification is low, the peaks may be so small that they cannot be detected. In that case, the analysis can be performed by nuclear magnetic resonance spectroscopy.

Furthermore, from the viewpoint of the durability such as heat resistance and contents resistance of the power storage device packaging material, and from the viewpoint of ensuring the moldability while reducing the thickness, the adhesive layer 5 is more preferably a cured product of a resin composition containing an acid-modified polyolefin and a curing agent. Preferred examples of the acid-modified polyolefin include the same acid-modified polyolefins as those mentioned above.

Preferably, the adhesive layer 5 is a cured product of a resin composition containing an acid-modified polyolefin and at least one selected from the group consisting of a compound having an isocyanate group, a compound having an oxazoline group, and a compound having an epoxy group. Particularly preferably, the adhesive layer 5 is a cured product of a resin composition containing an acid-modified polyolefin and at least one selected from the group consisting of a compound having an isocyanate group and a compound having an epoxy group. The adhesive layer 5 preferably contains at least one selected from the group consisting of a polyurethane, a polyester, and an epoxy resin, and more preferably contains a polyurethane and an epoxy resin. Preferred examples of the polyester include an ester resin produced by reacting an epoxy group and a maleic anhydride group, and an amide ester resin produced by reacting an oxazoline group and a maleic anhydride group. When unreacted matter of the curing agent such as the compound having an isocyanate group, the compound having an oxazoline group, or the epoxy resin remains in the adhesive layer 5, the presence of the unreacted matter can be confirmed using a method selected from, for example, infrared spectroscopy, Raman spectroscopy, and time-of-flight secondary ion mass spectrometry (TOF-SIMS).

Moreover, from the viewpoint of further improving the adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include a curing agent having an oxazoline group and a curing agent having an epoxy group. Examples of the curing agent having a C=N bond include a curing agent having an oxazoline group and a curing agent having an isocyanate group. Examples of the curing agent having a C-O-C bond include a curing agent having an oxazoline group and a curing agent having an epoxy group. The fact that the adhesive layer 5 is a cured product of a resin composition containing these curing agents can be confirmed using a method such as gas chromatography-mass spectrometry (GCMS), infrared spectroscopy (IR), time-of-flight secondary ion mass spectrometry (TOF-SIMS), or X-ray photoelectron spectroscopy (XPS).

While the compound having an isocyanate group is not limited, it is preferably a polyfunctional isocyanate compound, from the viewpoint of effectively improving the adhesion between the barrier layer 3 and the adhesive layer 5. The polyfunctional isocyanate compound is not limited as long as it is a compound having two or more isocyanate groups. Specific examples of polyfunctional isocyanate-based curing agents include pentane diisocyanate (PDI), isophorone diisocyanate (IPDI), hexamethylene diisocyanate (HDI), tolylene diisocyanate (TDI), and diphenylmethane diisocyanate (MDI), as well as polymer or isocyanurate forms thereof, mixtures thereof, or copolymers thereof with other polymers. Examples also include adducts, biurets, and isocyanurates.

The content of the compound having an isocyanate group in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5.

The compound having an oxazoline group is not limited as long as it is a compound having an oxazoline backbone. Specific examples of the compound having an oxazoline group include those having a polystyrene main chain and those having an acrylic main chain. Examples of commercial products include the Epocros series from Nippon Shokubai Co., Ltd.

The content of the compound having an oxazoline group in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5.

Examples of the compound having an epoxy group include an epoxy resin. The epoxy resin is not limited as long as it is a resin capable of forming a crosslinked structure with an epoxy group present in the molecule, and may be any of known epoxy resins. The weight average molecular weight of the epoxy resin is preferably about 50 to 2,000, more preferably about 100 to 1,000, and still more preferably about 200 to 800. In the first aspect of the disclosure, the weight average molecular weight of the epoxy resin is the value as measured by gel permeation chromatography (GPC), measured under conditions using polystyrene as standard samples.

Specific examples of the epoxy resin include glycidyl ether derivative of trimethylolpropane, bisphenol A diglycidyl ether, modified bisphenol A diglycidyl ether, bisphenol F-type glycidyl ether, novolac glycidyl ether, glycerol polyglycidyl ether, and polyglycerol polyglycidyl ether. These epoxy resins may be used alone or in combination.

The content of the epoxy resin in the adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5.

The polyurethane is not limited, and may be any of known polyurethanes. The adhesive layer 5 may be, for example, a cured product of a two-liquid curable polyurethane.

The content of the polyurethane in adhesive layer 5 is preferably in the range of 0.1 to 50% by mass, and more preferably in the range of 0.5 to 40% by mass, in the resin composition constituting the adhesive layer 5. This can effectively improve the adhesion between the barrier layer 3 and the adhesive layer 5, in an atmosphere containing a component that induces corrosion of the barrier layer, such as an electrolytic solution.

When the adhesive layer 5 is a cured product of a resin composition containing the above-described acid-modified polyolefin and at least one selected from the group consisting of a compound having an isocyanate group, a compound having an oxazoline group, and an epoxy resin, the acid-modified polyolefin functions as a base resin, and each of the compound having an isocyanate group, the compound having an oxazoline group, and the compound having an epoxy group functions as a curing agent.

The adhesive layer 5 may contain a modifier having a carbodiimide group.

The thickness of the adhesive layer 5 is preferably about 50 μm or less, about 40 μm or less, about 30 μm or less, about 20 μm or less, or about 5 μm or less. On the other hand, the thickness of the adhesive layer 5 is preferably about 0.1 μm or more or about 0.5 μm or more. Preferred ranges of the thickness of the adhesive layer 5 include from about 0.1 to 50 μm, from about 0.1 to 40 μm, from about 0.1 to 30 μm, from about 0.1 to 20 μm, from about 0.1 to 5 μm, from about 0.5 to 50 μm from about 0.5 to 40 μm, from about 0.5 to 30 μm, from about 0.5 to 20 μm, and from about 0.5 to 5 μm. More specifically, when the adhesive layer 5 is an adhesive as mentioned for the adhesive agent layer 2 or a cured product of an acid-modified polyolefin and a curing agent, the thickness of the adhesive layer 5 is preferably about 1 to 10 μm, and more preferably about 1 to 5 μm. When the adhesive layer 5 is a resin as mentioned for the heat-sealable resin layer 4, the thickness of the adhesive layer 5 is preferably about 2 to 50 μm, and more preferably about 10 to 40 μm. When the adhesive layer 5 is an adhesive as mentioned for the adhesive agent layer 2 or a cured product of a resin composition containing an acid-modified polyolefin and a curing agent, the adhesive layer 5 can be formed by, for example, applying the resin composition, and curing by heating or the like. When the adhesive layer 5 is a resin as mentioned for the heat-sealable resin layer 4, the adhesive layer 5 can be formed by, for example, extrusion molding of the heat-sealable resin layer 4 and the adhesive layer 5.

[Surface Coating Layer 6]

The power storage device packaging material of the present disclosure may optionally include a surface coating layer 6 on the base material layer 1 (opposite to the barrier layer 3 on the base material layer 1) for at least one of the purposes of improving the designability, electrolytic solution resistance, scratch resistance, and moldability, for example. The surface coating layer 6 is a layer positioned as the outermost layer of the power storage device packaging material when a power storage device is assembled using the power storage device packaging material.

The surface coating layer 6 may be formed of a resin such as polyvinylidene chloride, a polyester, a polyurethane, an acrylic resin, or an epoxy resin, for example.

When the resin forming the surface coating layer 6 is a curable resin, the resin may be either a one-liquid curable resin or a two-liquid curable resin, preferably a two-liquid curable resin. The two-liquid curable resin may be, for example, a two-liquid curable polyurethane, a two-liquid curable polyester, or a two-liquid curable epoxy resin. Among the above, a two-liquid curable polyurethane is preferred.

The two-liquid curable polyurethane may be, for example, a polyurethane that contains a first agent containing a polyol compound and a second agent containing an isocyanate compound. The two-liquid curable polyurethane is preferably a two-liquid curable polyurethane that contains a polyol such as a polyester polyol, a polyether polyol, or an acrylic polyol as the first agent, and an aromatic or aliphatic polyisocyanate as the second agent. The polyurethane may be, for example, a polyurethane that contains a polyurethane compound obtained by reacting a polyol compound and an isocyanate compound beforehand, and an isocyanate compound. The polyurethane may be, for example, a polyurethane that contains a polyurethane compound obtained by reacting a polyol compound and an isocyanate compound beforehand, and a polyol compound. The polyurethane may be, for example, a polyurethane produced by curing a polyurethane compound obtained by reacting a polyol compound and an isocyanate compound beforehand, by reacting with moisture such as moisture in the air. The polyol compound is preferably a polyester polyol having a hydroxy group at a side chain, in addition to the hydroxy groups at the ends of the repeating unit. Examples of the second agent include aliphatic, alicyclic, aromatic, and aromatic and aliphatic isocyanate compounds. Examples of isocyanate compounds include hexamethylene diisocyanate (HDI), xylylene diisocyanate (XDI), isophorone diisocyanate (IPDI), hydrogenated XDI (H6XDI), hydrogenated MDI (H12MDI), tolylene diisocyanate (TDI), diphenylmethane diisocyanate (MDI), and naphthalene diisocyanate (NDI). Examples also include modified polyfunctional isocyanates obtained from one, or two or more of these diisocyanates. A multimer (for example, a trimer) may also be used as a polyisocyanate compound. Examples of such multimers include adducts, biurets, and isocyanurates. An aliphatic isocyanate compound refers to an isocyanate having an aliphatic group and no aromatic ring, an alicyclic isocyanate compound refers to an isocyanate having an alicyclic hydrocarbon group, and an aromatic isocyanate compound refers to an isocyanate having an aromatic ring. When the surface coating layer 6 is formed of a polyurethane, the power storage device packaging material is imparted with excellent electrolytic solution resistance.

At least one of the surface and the inside of the surface coating layer 6 may optionally contain additives, such as the above-mentioned lubricants, anti-blocking agents, matting agents, flame retardants, antioxidants, tackifiers, and anti-static agents, depending on the functionality and the like to be imparted to the surface coating layer 6 and the surface thereof. Examples of the additives include fine particles having an average particle diameter of about 0.5 nm to 5 μm.

The average particle diameter of the additives is the median diameter as measured using a laser diffraction/scattering particle size distribution analyzer.

The additives may be either inorganic or organic. The additives are also not limited in shape, and may be spherical, fibrous, plate-like, irregular, or flake-like, for example.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acrylic, crosslinked styrene, crosslinked polyethylene, benzoguanamine, gold, aluminum, copper, and nickel. These additives may be used alone or in combination. Among these additives, silica, barium sulfate, and titanium oxide are preferred from the viewpoint of dispersion stability, costs, and the like. Surfaces of the additives may be subjected to various types of surface treatment, such as insulation treatment and dispersibility enhancing treatment.

Examples of methods of forming the surface coating layer 6 include, but are not limited to, applying the resin for forming the surface coating layer 6. When an additive is to be used in the surface coating layer 6, the resin blended with the additive may be applied.

The thickness of the surface coating layer 6 is not limited as long as the above-described function as the surface coating layer 6 is exhibited; for example, it is about 0.5 to 10 μm, and preferably about 1 to 5 μm.

## 3. Method for Producing Power Storage Device Packaging Material

The method for producing the power storage device packaging material is not limited as long as it produces a laminate in which the layers of the power storage device packaging material of the present disclosure are laminated. Examples of the method include a method comprising the step of laminating at least the base material layer 1, the barrier layer 3, and the heat-sealable resin layer 4 in this order. Specifically, the method for producing the power storage device packaging material 10 of the present disclosure comprises a laminate comprising at least a base material layer, a barrier layer, and a heat-sealable resin layer in this order, wherein the base material layer contains a polyester film, and the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less.

One example of the method for producing the power storage device packaging material of the present disclosure is as follows: Initially, a laminate including the base material layer 1, the adhesive agent layer 2, and the barrier layer 3 in this order (the laminate may be hereinafter denoted as the "laminate A") is formed. Specifically, the laminate A can be formed using a dry lamination method as follows: The adhesive to be used for forming the adhesive agent layer 2 is applied to the base material layer 1 or to the barrier layer 3 with surface(s) optionally subjected to chemical conversion treatment, using a coating method such as a gravure coating method or a roll coating method, and dried. Then, the barrier layer 3 or the base material layer 1 is laminated thereon, and the adhesive agent layer 2 is cured.

Subsequently, the heat-sealable resin layer 4 is laminated on the barrier layer 3 of the laminate A. When the heat-sealable resin layer 4 is to be laminated directly on the barrier layer 3, the heat-sealable resin layer 4 may be laminated onto the barrier layer 3 of the laminate A, using a method such as a thermal lamination method or an extrusion lamination method. When the adhesive layer 5 is to be provided between the barrier layer 3 and the heat-sealable resin layer 4, exemplary methods include the following: (1) a method in which the adhesive layer 5 and the heat-sealable resin layer 4 are extruded to be laminated on the barrier layer 3 of the laminate A (co-extrusion lamination or tandem lamination method); (2) a method in which a laminate in which the adhesive layer 5 and the heat-sealable resin layer 4 are laminated is separately formed, and this laminate is laminated on the barrier layer 3 of the laminate A using a thermal lamination method, or a method in which a laminate in which the adhesive layer 5 is laminated on the barrier layer 3 of the laminate A is formed, and this laminate is laminated to the heat-sealable resin layer 4 using a thermal lamination method; (3) a method in which the adhesive layer 5 that has been melted is poured between the barrier layer 3 of the laminate A and the heat-sealable resin layer 4 pre-formed into a sheet, and simultaneously the laminate A and the heat-sealable resin layer 4 are bonded with the adhesive layer 5 sandwiched therebetween (sandwich lamination method); and (4) a method in which the adhesive for forming the adhesive layer 5 is laminated on the barrier layer 3 of the laminate A by, for example, applying the adhesive onto the barrier layer 3 using solution coating, and drying, or further baking, and then the heat-sealable resin layer 4 pre-formed into a sheet is laminated on the adhesive layer 5.

When the surface coating layer 6 is to be provided, the surface coating layer 6 is laminated on the surface of the base material layer 1 opposite to the barrier layer 3. The surface coating layer 6 can be formed by, for example, applying the above-mentioned resin forming the surface coating layer 6 onto the surface of the base material layer 1. The order of the step of laminating the barrier layer 3 on the surface of the base material layer 1 and the step of laminating the surface coating layer 6 on the surface of the base material layer 1 is not limited. For example, the surface coating

layer 6 may be formed on the surface of the base material layer 1, and then the barrier layer 3 may be formed on the surface of the base material layer 1 opposite to the surface coating layer 6.

In the manner as described above, a laminate including the optional surface coating layer 6/the base material layer 1/the optional adhesive agent layer 2/the barrier layer 3/the optional adhesive layer 5/the heat-sealable resin layer 4 in this order is formed. The laminate may optionally be further subjected to heat treatment, in order to strengthen the adhesiveness of the optional adhesive agent layer 2 and the optional adhesive layer 5.

In the power storage device packaging material, each layer constituting the laminate may be optionally subjected to a surface activation treatment, such as corona treatment, blast treatment, oxidation treatment, or ozone treatment, to thereby improve the processability. For example, ink printability on the surface of the base material layer 1 can be improved by corona-treating the surface of the base material layer 1 opposite to the barrier layer 3.

4. Uses of Power Storage Device Packaging Material

The power storage device packaging material of the present disclosure is used as a package for hermetically sealing and housing a power storage device element including a positive electrode, a negative electrode, and an electrolyte. That is, a power storage device can be provided by housing a power storage device element comprising at least a positive electrode, a negative electrode, and an electrolyte in a package formed of the power storage device packaging material of the present disclosure.

Specifically, a power storage device element comprising at least a positive electrode, a negative electrode, and an electrolyte is covered with the power storage device packaging material of the present disclosure such that a flange portion (region where the heat-sealable resin layer is contacted with another heat-sealable resin layer) can be formed on the periphery of the power storage device element, with the metal terminal connected to each of the positive electrode and the negative electrode protruding to the outside. Then, the heat-sealable resin layers in the flange portion are heat-sealed to hermetically seal the power storage device element. As a result, a power storage device is provided using the power storage device packaging material. When the power storage device element is housed in the package formed of the power storage device packaging material of the present disclosure, the package is formed such that the heat-sealable resin layer region of the power storage device packaging material of the present disclosure is positioned on the inner side (surface in contact with the power storage device element). Two sheets of the power storage device packaging material may be placed over each other with the heat-sealable resin layers opposing each other, and peripheral portions of the power storage device packaging materials placed over each other may be heat-sealed to form a package. Alternatively, as in the example shown in Fig. 5, one sheet of the power storage device packaging material may be folded over to place one surface over the other, and peripheral portions thereof may be heat-sealed to form a package. When the power storage device packaging material is folded over to place one surface over the other, the sides other than the folded sides may be heat-sealed to form a package by three-side sealing, as in the example shown in Fig. 5. Alternatively, the power storage device packaging material may be folded over such that a flange portion is formed, and a package may be formed by four-side sealing. Moreover, in the power storage device packaging material, a concave portion for housing the power storage device element may be formed by deep drawing or bulging. As in the example shown in Fig. 5, a concave portion may be provided in one sheet of the power storage device packaging material, but not in the other sheet. Alternatively, a concave portion may also be provided in the other sheet of the power storage device packaging material.

The power storage device packaging material of the present disclosure is suitable for use in power storage devices, such as batteries (including condensers and capacitors). The power storage device packaging material of the present disclosure may be used for either primary batteries or secondary batteries, but are preferably used for secondary batteries. While the type of secondary batteries to which the power storage device packaging material of the present disclosure is applied is not limited, examples include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers, and capacitors. Among these secondary batteries, preferred secondary batteries to which the power storage device packaging material of the present disclosure is applied include lithium ion batteries and lithium ion polymer batteries.

Examples

The present disclosure will be hereinafter described in detail with reference to examples and comparative examples, although the present disclosure is not limited to the examples.

[Examples 1-13 and Comparative Examples 1-2]

<Production and Evaluations of Polyester Films>

Polyester films were produced and evaluated using the following methods.

(1) Polyester Composition

The polyester resin and film were dissolved in hexafluoroisopropanol (HFIP), and the contents of each monomer residue and by-product diethylene glycol were quantified using $^{1}$H-NMR and $^{13}$C-NMR.

(2) Film Thickness and Layer Thickness

For measurement of the thickness of the entire film, using a dial gauge, a sample with a size of 200 mm × 300 mm was cut out from the film, thicknesses of the sample at given five points were measured, and the average was determined. For measurement of the thickness of each layer in the film and the thickness of each layer in the packaging material, the sample was embedded in epoxy resin, a cross section of the film was cut out using a microtome, and the cross section was observed with a transmission electron microscope (TEMH 7100 from Hitachi, Ltd.) at 5000 times magnification.

(3) Longitudinal and Width Directions of Polyester Film

As used herein, the width direction of the film was defined as the direction with the highest rupture strength of the rupture strengths measured in a given one direction (0°) of the film, and directions of 15°, 30°, 45°, 60°, 75°, 90°, 105°, 120°, 135°, 150°, and 165° from the direction, and the longitudinal direction of the film was defined as the direction perpendicular to the width direction. The rupture strength can be obtained using the method described in "(6) Rupture Elongation". In "(6) Rupture Elongation", a rectangular sample with a long side of 150 mm and a short side of 10 mm was cut out and used for the measurement. At this time, samples were cut out such that the long sides coincided with the 12 directions described above, i.e., the given one direction (0°) of the film, and the directions of 15°, 30°, 45°, 60°, 75°, 90°, 105°, 120°, 135°, 150°, and 165° from the direction, and used for the measurement.

(4) Intrinsic Viscosity

Solution viscosities of the polyester film in ortho-chlorophenol at 25°C were measured using an Ostwald viscometer, and the intrinsic viscosity was calculated from the solution viscosities. The intrinsic viscosity is expressed in terms of [dl/g]. The number n was 3, and the average value was employed.

(5) Plane Orientation Coefficient fn of Polyester Film

Using an Abbe refractometer, the layer for the measurement of plane orientation coefficient (hereinafter referred to as the measurement layer) was brought in intimate contact with the glass surface. Subsequently, refractive indices in direction a, direction b, and the thickness direction (Nx, Ny, Nz) were measured with sodium D-line as the light source. The plane orientation coefficient fn of the measurement layer was determined according to the following equation:

$$\text{- plane orientation coefficient fn} = (Nx + Ny)/2 - Nz$$

(6) Rupture Elongation

A rectangular sample with a length of 150 mm and a width of 10 mm in the longitudinal and width directions was cut out from the film. Using a tensile testing machine (film strength/elongation automatic measurement apparatus "Tensilon AMF/RTA-100" from Orientec Co., Ltd.), under conditions at 25°C and 63% Rh, a tensile test was performed in the longitudinal and width directions of the film, at a crosshead speed of 300 mm/min, a width of 10 mm, and a sample length of 50 mm. The value obtained by reading the elongation at rupture was determined as the rupture elongation. Five measurements were made, and the average was employed.

(7) Degree of Crystallinity

According to JIS K 7122 (1999), using the differential scanning calorimeter robot DSC-RDC 220 from Seiko Instruments & Electronics Ltd., and using "Disk Session" SSC/5200 from Seiko Instruments & Electronics Ltd. for data analysis, 5 mg of a film sample on an aluminum receiving tray was heated from room temperature to 300°C at a heating rate of 20°C/min, and held at 300°C for 5 minutes. Using the thus-measured heat of endothermic peak ΔHm, heat of cold crystallization ΔHc, and heat of melting ΔHm0 (140.1 J/g) of completely crystalline PET, the degree of crystallinity was calculated according to the following equation:

$$\text{degree of crystallinity (\%)} = (\Delta\text{Hm} - \Delta\text{Hc})/\Delta\text{Hm0} \times 100$$

(8) Rigid Amorphous Fraction

From the degree of crystallinity and a mobile amorphous fraction obtained by measurement, the rigid amorphous fraction was calculated using the following equation:

$$\text{rigid amorphous fraction (\%)} = 100 - (\text{mobile amorphous fraction} + \text{degree of crystallinity})$$

$$\text{theoretical value of difference in specific heat of completely amorphous polyethylene terephthalate} = 0.4052\ \text{J/(g °C)}$$

Reference was herein made to the theoretical value of the difference in specific heat of completely amorphous polyethylene terephthalate.

The mobile amorphous fraction was measured as follows. Using a temperature modulated DSC from TA Instruments, 5 mg of a sample was subjected to measurement in a nitrogen atmosphere, from 0 to 150°C at a heating rate of 2 °C/min, a temperature modulation amplitude of ± 1°C, and a temperature modulation period of 60 sec. The difference in specific heat at the glass transition temperature obtained by the measurement was determined, and the mobile amorphous fraction was calculated according to the following equation:

$$\text{mobile amorphous fraction (\%)} = (\text{difference in specific heat})/(\text{theoretical value of difference in specific heat of completely amorphous polyester}) \times 100$$

$$\text{theoretical value of difference in specific heat of completely amorphous polyethylene terephthalate} = 0.4052\ \text{J/(g °C)}$$

For a sample with a polyethylene terephthalate unit content of 70 mol% or more, reference was herein made to the theoretical value of the difference in specific heat of completely amorphous polyethylene terephthalate.

(9) Glass Transition Temperature Tg and Melting Point (Melting Endothermic Peak Temperature Tm)

According to JIS K 7122 (1999), using a differential scanning calorimeter (EXSTAR DSC6220 from Seiko Instruments Inc.), 3 mg of the resin was heated from 30 to 300°C at 20°C/min in a nitrogen atmosphere. Subsequently, the resin was held at 300°C for 5 minutes and then cooled to 30°C at 40°C/min. The resin was further held at 30°C for 5 minutes and then heated from 30 to 300°C at 20°C/min. The glass transition temperature obtained during this heating was calculated according to the following equation (i):

$$\text{glass transition temperature} = (\text{extrapolated glass transition onset temperature} + \text{extrapolated glass transition end temperature})/2 \ldots (i)$$

As used herein, the extrapolated glass transition onset temperature is defined as the temperature at the intersection point between the straight line formed by extending the lower temperature-side baseline to the higher temperature side, and the tangent drawn at the point where the slope of the curve of a stepwise change portion of the glass transition is maximal. The extrapolated glass transition end temperature is defined as the temperature at the intersection point between the straight line formed by extending the higher temperature-side baseline to the lower temperature side, and the tangent drawn at the point where the slope of a stepwise change portion of the glass transition is maximal. The melting point (melting endothermic peak temperature Tm) is defined as the peak top of the endothermic peak due to crystalline melting of the resin.

(10) Work Hardening Exponent

A rectangular sample with a length of 150 mm and a width of 10 mm in the longitudinal and width directions was cut out from the film. Using a tensile testing machine (film strength/elongation automatic measurement apparatus "Tensilon AMF/RTA-100" from Orientec Co., Ltd.), under conditions at 25°C and 63% Rh, a tensile test was performed in the longitudinal and width directions of the film, at a crosshead speed of 300 mm/min, a width of 10 mm, and a sample length (gauge length) of 50 mm. When the initial length is defined as $L^0$ (mm), the length at 5% elongation defined as $L^1$ (mm), the nominal stress at 5% elongation defined as $P^1$ (MPa), the length at 60% elongation defined as $L^2$ (mm), and the nominal stress at 60% elongation defined as $P^2$ (MPa), the true strain at 5% elongation is the value obtained according to equation (1), the true strain at 60% elongation is the value obtained according to equation (2), the true stress at 5% elongation is the value obtained according to equation (3), and the true stress at 60% elongation is the value obtained according to equation (4). From the values obtained according to equations (1) to (4), the work hardening exponent was determined as the slope obtained from the equation that holds when the X-axis is the true strain, and the Y-axis is the true stress. Five measurements were made in each of the longitudinal and width directions, and the average value was employed.

$$\text{true strain at 5\% elongation} = L_n(L^1/L^0) \ldots (1)$$

$$\text{true strain at 60\% elongation} = L_n(L^2/L^1) \ldots (2)$$

$$\text{true stress at 5\% elongation} = L_n(P^1(1 + L_n(L^1/L^0))) \ldots (3)$$

$$\text{true stress at 60\% elongation} = L_n(P^2(1 + L_n(L^2/L^1))) \ldots (4)$$

* $L_n$: natural logarithm

(11) Heat Shrink Ratio at 150°C in Longitudinal and Width Directions of Polyester Film

A rectangular sample with a length of 150 mm and a width of 10 mm in the longitudinal and width directions was cut out from the film. Reference lines were drawn on the sample at a spacing of 100 mm. In a hot air oven in which a weight of 3 g was hung and which was heated to 150°C, the sample was placed for 30 minutes to be heat treated. The distance between the reference lines after the heat treatment was measured, and the heat shrink ratio was calculated based on a change between the distances between the reference lines before and after the heat treatment. The measurement was performed for five samples in the longitudinal and width directions, and the evaluation was made using the average value.

(12) Dynamic Friction Coefficient of Polyester Film

Using a slip tester from Toyo Seiki, Ltd., according to JIS-K 7125 (1999), both surfaces of the film were placed over each other and then rubbed against each other, and a stable region of the resistance value after an initial rise was

measured as the dynamic friction coefficient μd. Samples were prepared in the form of a rectangle with a width of 80 mm and a length of 200 mm. Three sets of these samples (i.e., six samples) were cut out from a roll in the longitudinal direction of the rectangle. Three measurements are made, and the average value was determined.

(13) Wrinkles during Extrusion Lamination

From each of the packaging materials obtained using the below-described method in <Production of Power Storage Device Packaging Materials>, a region of 60,000 $mm^2$ was cut out, and the external appearance of the region was visually observed and evaluated as follows:

○: No wrinkles were observed in the entire film.
△: A wrinkle of less than 5 mm was observed.
×: A wrinkle of 5 mm or more was observed.

(Production of Polyester Films)

Resins constituting polyester films, which were formed into films, were each obtained by mixing a main raw material, an auxiliary raw material, and a particle masterbatch according to the types and the ratio shown in Table 1 for each of the examples and comparative examples. The main raw material, the auxiliary raw material, and the particle masterbatch used in each of the examples and comparative examples were prepared as follows:

- Polyester A
  A polyethylene terephthalate resin (intrinsic viscosity: 0.72) containing 100 mol% of a terephthalic acid component as a dicarboxylic acid component and 100 mol% of an ethylene glycol component as a glycol component.
- Polyester B
  A polyethylene terephthalate resin (intrinsic viscosity: 0.82) containing 100 mol% of a terephthalic acid component as a dicarboxylic acid component and 100 mol% of an ethylene glycol component as a glycol component.
- Polyester C
  A polyethylene terephthalate resin (intrinsic viscosity: 0.92) containing 100 mol% of a terephthalic acid component as a dicarboxylic acid component and 100 mol% of an ethylene glycol component as a glycol component.
- Polyester D
  A polybutylene terephthalate resin (intrinsic viscosity: 1.2) containing 100 mol% of a terephthalic acid component as a dicarboxylic acid component and 100 mol% of a 1-4,butanediol component as a glycol component.
- Polyester E
  A polyethylene terephthalate resin (intrinsic viscosity: 0.65) containing 100 mol% of a terephthalic acid component as a dicarboxylic acid component and 100 mol% of an ethylene glycol component as a glycol component.
- Particle Masterbatch A
  A polyethylene terephthalate particle masterbatch containing aggregated silica particles with an average particle diameter of 1.2 μm at a particle concentration of 2% by weight in the polyester A.

(Coating Preparation A)

- Acrylic resin with a copolymer composition of methyl methacrylate/ethyl acrylate/acrylic acid/N-methylolacrylamide = 63/35/1/1 in % by mass: 3.00% by mass
- Melamine crosslinking agent: 0.75% by mass
- Colloidal silica particles (average particle size: 80 nm): 0.15% by mass
- Hexanol: 0.26% by mass
- Butyl cellosolve: 0.18% by mass
- Water: 95.66% by mass

Using an extruder, the polyester type and the particle masterbatch shown in Table 1 were each dried in a vacuum dryer at 180°C for 4 hours to thoroughly remove moisture, and then the main raw material, the auxiliary raw material, and the particle masterbatch were introduced into the extruder as shown in Table 1 and melted at 280°C. Subsequently, the resin melt-extruded from the extruder, the resin discharged from the spinneret was cooled and solidified on a cast drum cooled to 25°C to give an unstretched sheet. At this time, the distance between the T-die lip and the cooling drum was set to 35 mm, and the resin was brought in intimate contact with the cooling drum by applying static

electricity at a voltage of 14 kV using wire-shaped electrodes with a diameter of 0.1 mm. The rate of passage of the unstretched sheet through the cooling drum was 25 m/min, and the length of contact of the unstretched sheet with the cooling drum was 2.5 m.

Subsequently, the unstretched sheet was preheated using a group of rolls heated to the temperature shown in Table 2, and then stretched in the longitudinal direction (machine direction) at the ratio shown in Table 2 using a heating roll controlled to the temperature shown in Table 2, and the resulting film was cooled using a group of rolls at a temperature of 25°C to give a uniaxially stretched film. The uniaxially stretched film was subjected to corona discharge treatment in air, and the treated surface was subjected to surface treatment by mixing the coating preparation A for forming an anchor coat layer while ultrasonically dispersing it, and uniformly applying the coating preparation A onto the surface adhering to the cast, using a metering bar #4. Next, the uniaxially stretched film with both ends being held with clips were guided in the tenter to a preheating zone controlled to the temperature shown in Table 2, and then successively to a heating zone kept at the temperature shown in Table 2, where the film was stretched in the direction perpendicular to the longitudinal direction (width direction) at the ratio shown in Table 2. Then, in the heat treatment zone in the tenter, the film was heat-treated for 20 seconds at the heat treatment temperature shown in Table 2, and further subjected to relaxation treatment at the relaxation temperature shown in Table 2 and the relaxation ratio shown in Table 2. Next, the film was cooled slowly and uniformly to give a polyester film with the thickness shown in Table 1. The properties of the polyester film are as shown in Table 3.

<Production of Power Storage Device Packaging Materials>

In each of Examples 1 to 12 and Comparative Examples 1 and 2, using the polyester film obtained by the above-described method as a base material layer, a power storage device packaging material was produced using the following procedures. Each polyester film (PET, thickness: 25 μm) as a base material layer and an aluminum foil (JIS H 4160: 1994 A8021H-O, thickness: 40 μm) as a barrier layer with corrosion-resistant films formed on both surfaces were prepared. Next, the base material layer and the barrier layer were laminated with a two-liquid curable urethane adhesive (a polyol compound and an aromatic isocyanate compound), using a dry lamination method, and the resulting laminate was subjected to aging treatment to give a laminate of the base material layer (thickness: 25 μm)/the adhesive agent layer (thickness after curing: 3 μm)/the barrier layer (thickness: 40 μm). In Example 13, the resin film obtained by the above-described method (polyethylene terephthalate film, thickness: 12 μm) was laminated to a stretched nylon film (thickness: 15 μm) with a two-liquid curable urethane adhesive (a polyol compound and an aromatic isocyanate compound, thickness after curing: 3 μm) to give a laminated film (PET/ONy), and, using the laminated film as a base material layer, a power storage device packaging material was produced using the following procedures. The laminated film (PET/ONy) as a base material layer and an aluminum foil (JIS H 4160: 1994 A8021H-O, thickness: 40 μm) as a barrier layer with corrosion-resistant films formed on both surfaces were prepared. Next, the ONy side of the base material layer and the barrier layer were laminated with a two-liquid curable urethane adhesive (a polyol compound and an aromatic isocyanate compound), using a dry lamination method, and the resulting laminate was subjected to aging treatment to give a laminate of the base material layer (thickness: 30 μm)/the adhesive agent layer (thickness after curing: 3 μm)/the barrier layer (thickness: 40 μm).

Next, maleic anhydride-modified polypropylene (PPa, thickness: 40 μm) as an adhesive layer and polypropylene (PP, thickness: 40 μm) as a heat-sealable resin layer were co-extruded onto the barrier layer of the resulting laminate to laminate the adhesive layer/the heat-sealable resin layer onto the barrier layer. Next, the resulting laminate was aged and heated to give a power storage device packaging material having the polyester film/the adhesive agent layer/the barrier layer/the adhesive layer/the heat-sealable resin layer laminated in this order.

Erucamide was applied as a lubricant onto an outer surface of the base material layer of each power storage device packaging material.

<Evaluation of Moldability>

Each power storage device packaging material was cut into a rectangle with a length (machine direction (MD)) of 90 mm and a width (transverse direction (TD)) of 150 mm for use as a test sample. Using a rectangular molding die with an opening size of 31.6 mm (MD direction) × 54.5 mm (TD) (female die; with a surface having a maximum height of roughness profile (nominal value of Rz) of 3.2 μm, as specified in Table 2 of JIS B 0659-1: 2002 Appendix 1 (Referential) Surface Roughness Standard Specimens for Comparison; corner R: 2.0 mm; ridge R: 1.0 mm) and a corresponding molding die (male die; with a surface having a maximum height of roughness profile (nominal value of Rz) of 1.6 μm, as specified in Table 2 of JIS B 0659-1: 2002 Appendix 1 (Referential) Surface Roughness Standard Specimens for Comparison; corner R: 2.0 mm; ridge R: 1.0 mm), ten samples for each power storage device packaging material as described above were cold-molded (draw-in one-step molding) at a pressing pressure (surface pressure) of 0.25 MPa while varying the molding depth from a molding depth of 0.5 mm in 0.5 mm increments. Here, molding was performed

with the test sample being placed on the female die such that the heat-sealable resin layer side was positioned on the male die side. The clearance between the male die and the female die was 0.3 mm. Molding was performed in a 25°C environment. The cold-molded samples were inspected for pinholes or cracks in the aluminum alloy foil, by directing light to the samples with a penlight in a dark room, and allowing the light to pass therethrough. The deepest molding depth at which no pinholes or cracks occurred in the aluminum alloy foil for all of the ten samples was defined as A, and the number of samples in which pinholes or the like occurred at the shallowest molding depth in the aluminum alloy foil was defined as B. The value calculated using the equation shown below was rounded off to the first decimal place, and the result was employed as the limit molding depth of the power storage device packaging material. For each power storage device packaging material, the evaluation was made based on the four levels of criteria of depth as shown below. The results are shown in Table 3.

$$\text{limit molding depth} = \text{A mm} + (0.5\ \text{mm}/10) \times (10 - \text{B})$$

(Evaluation Criteria of Moldability)

S: limit molding depth of 6.5 mm or more
A: limit molding depth of 6.0 mm or more and less than 6.5 mm
B: limit molding depth of 5.0 mm or more and less than 6.0 mm
C: limit molding depth of 4.5 mm or more and less than 5.0 mm
D: limit molding depth of less than 4.5 mm

[Table 1]

<table>
<tr><th rowspan="3"></th><th colspan="9">Polyester Film</th></tr>
<tr><th rowspan="2">Main Raw Material</th><th rowspan="2">Auxiliary Raw Material</th><th rowspan="2">Particle Masterbatch Type</th><th colspan="3">Mixing Ratio in Each Resin (% by Mass)</th><th rowspan="2">Melting Point Tm [°C]</th><th rowspan="2">Glass Transition Temperature Tg [°C]</th><th rowspan="2">Thickness [μm]</th></tr>
<tr><th>Main Raw Material</th><th>Auxiliary Raw Material</th><th>Particle Masterbatch Type</th></tr>
<tr><td>Ex. 1</td><td rowspan="8">Polyester A</td><td rowspan="10">–</td><td rowspan="15">Particle Masterbatch A</td><td rowspan="10">98</td><td rowspan="10">0</td><td rowspan="15">2</td><td rowspan="10">255</td><td rowspan="10">82</td><td rowspan="12">25</td></tr>
<tr><td>Ex. 2</td></tr>
<tr><td>Ex. 3</td></tr>
<tr><td>Ex. 4</td></tr>
<tr><td>Ex. 5</td></tr>
<tr><td>Ex. 6</td></tr>
<tr><td>Ex. 7</td></tr>
<tr><td>Ex. 8</td></tr>
<tr><td>Ex. 9</td><td>Polyester B</td></tr>
<tr><td>Ex. 10</td><td>Polyester C</td></tr>
<tr><td>Ex. 11</td><td rowspan="4">Polyester A</td><td>Polyester D</td><td>68</td><td>30</td><td>240</td><td>70</td></tr>
<tr><td>Ex. 12</td><td rowspan="4">–</td><td rowspan="4">98</td><td rowspan="4">0</td><td rowspan="4">255</td><td rowspan="4">82</td></tr>
<tr><td>Ex. 13</td><td>12</td></tr>
<tr><td>Comp. Ex. 1</td><td rowspan="2">25</td></tr>
<tr><td>Comp. Ex. 2</td><td>Polyester E</td></tr>
</table>

[Table 2]

| | Film Formation Conditions for Polyester Film | | | | | | | | | |
|---|---|---|---|---|---|---|---|---|---|---|
| | Stretch Ratio of Polyester Film | | | Film Preheating Temperature | | Film Stretching Temperature | | Heat Treatment Temperature [°C] | Relaxation Temperature [°C] | Relaxation Ratio [%] |
| | Longitudinal Direction [Times] | Width Direction [Times] | Area Ratio | Longitudinal Direction [°C] | Width Direction [°C] | Longitudinal Direction [°C] | Width Direction [°C] | | | |
| Ex. 1 | 3.6 | 3.3 | 11.88 | 78 | 80 | 84 | 90 | 200 | 200 | 3 |
| Ex. 2 | 3.7 | 3.4 | 12.58 | | | | | | | |
| Ex. 3 | 3.8 | 3.6 | 13.68 | | | | | | | |
| Ex. 4 | | 3.8 | 14.44 | | | | | | | |
| Ex. 5 | | 3.6 | 13.68 | | | | | 190 | 190 | |
| Ex. 6 | | | | | | | | | | 0 |
| Ex. 7 | | | | | | | | 180 | 180 | 3 |
| Ex. 8 | | | | | | | | 170 | 170 | |
| Ex. 9 | | | | | | | | 190 | 190 | |
| Ex. 10 | | | | | | | | | | |
| Ex. 11 | | | | 62 | 70 | 72 | 80 | | | |
| Ex. 12 | | | | 78 | 80 | 84 | 90 | 220 | 220 | |
| Ex. 13 | 3.8 | 3.6 | 13.68 | | | | | 200 | 200 | |
| Comp. Ex. 1 | 3.3 | 3.3 | 10.89 | | | | | 200 | 200 | |
| Comp. Ex. 2 | 3.8 | 3.6 | 13.68 | | | | | | | |

[Table 3]

| | Properties of Polyester Film | | | | | | | | | | | | | | Moldability of Power Storage Device Packaging Material |
|---|---|---|---|---|---|---|---|---|---|---|---|---|---|---|---|
| | Film Intrinsic Viscosity [dl/g] | Plane Orientation Coefficient | Work Hardening Exponent | | | Rupture Elongation [%] | | Heat Shrink Ratio [%] at 150°C | | Degree of Crystallinity [%] | Mobile Amorphous Fraction [%] | Rigid Amorphous Fraction [%] | Wrinkles during Extrusion Lamination | Dynamic Friction Coefficient | |
| | | | Longitudinal Direction | Width Direction | Difference between Longitudinal and Width Directions | Longitudinal Direction | Width Direction | Longitudinal Direction | Width Direction | | | | | | |
| Ex. 1 | 0.70 | 0.163 | 2.3 | 1.8 | 0.5 | 110 | 160 | 3.8 | 3.5 | 31.0 | 33.0 | 36.0 | ○ | 0.34 | C |
| Ex. 2 | | 0.165 | 2.5 | 2.1 | 0.4 | 115 | 150 | 4.2 | 3.8 | 30.0 | 35.0 | 35.0 | ○ | 0.34 | B |
| Ex. 3 | | 0.166 | 2.8 | 2.4 | | 120 | 143 | 4.8 | 4.2 | 29.0 | 33.0 | 38.0 | ○ | 0.34 | B |
| Ex. 4 | | 0.168 | | 2.5 | 0.3 | 95 | 110 | 5.8 | 5.5 | 32.0 | 31.0 | 37.0 | ○ | 0.34 | C |
| Ex. 5 | | 0.167 | | | | 120 | 145 | 5.5 | 4.5 | 25.0 | 33.0 | 42.0 | ○ | 0.34 | S |
| Ex. 6 | | | | | | 118 | 143 | 5.8 | 6.1 | 25.0 | 34.0 | 41.0 | ○ | 0.34 | S |
| Ex. 7 | | | | | | 115 | 138 | 10.5 | 11.2 | 24.0 | 32.0 | 44.0 | × | 0.34 | S |
| Ex. 8 | | | | | | 112 | 146 | 13.2 | 12.1 | 16.5 | 32.8 | 50.7 | × | 0.34 | S |
| Ex. 9 | 0.68 | | | | | 116 | 134 | 5.6 | 4.5 | 25.3 | 33.0 | 41.7 | ○ | 0.34 | S |
| Ex. 10 | 0.75 | | | | | 112 | 154 | 5.8 | 5.2 | 25.1 | 33.5 | 41.4 | ○ | 0.34 | S |
| Ex. 11 | 0.85 | | | | | 121 | 134 | 5.4 | 5.1 | 25.8 | 33.4 | 40.8 | ○ | 0.34 | S |
| Ex. 12 | 0.67 | | | | | 120 | 135 | 2.0 | 2.2 | 38.5 | 32.5 | 29.0 | × | 0.34 | C |
| Ex. 13 | 0.70 | 0.167 | 2.4 | 1.9 | 0.5 | 110 | 142.1 | 4.3 | 3.6 | 32.0 | 31.0 | 37.0 | ○ | 0.34 | S |
| Comp. Ex. 1 | 0.67 | 0.161 | 1.5 | 1.4 | 0.1 | 150 | 165 | 2.5 | 2.2 | 35.6 | 33.0 | 31.4 | × | 0.34 | D |
| Comp. Ex. 2 | 0.63 | 0.167 | 2.8 | 2.5 | 0.3 | 122 | 135 | 5.5 | 4.8 | 31.0 | 33.0 | 36.0 | ○ | 0.34 | D |

As described above, the present disclosure provides embodiments of the invention as itemized below:

Item 1. A power storage device packaging material comprising a laminate comprising at least a base material layer, a barrier layer, and a heat-sealable resin layer in this order,

wherein the base material layer contains a polyester film, and
the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less.

Item 2. The power storage device packaging material according to item 1, wherein the polyester film has a thickness of 5 μm or more and 40 μm or less.
Item 3. The power storage device packaging material according to item 1 or 2, wherein the polyester film has a melting point of 235°C or more.

Item 4. The power storage device packaging material according to any one of items 1 to 3, wherein the polyester film has a degree of crystallinity of 15% or more and 40% or less.
Item 5. The power storage device packaging material according to any one of items 1 to 4, wherein the polyester film has a rupture elongation of 100% or more in at least one of the longitudinal and width directions.
Item 6. A power storage device comprising a power storage device element comprising at least a positive electrode, a negative electrode, and an electrolyte, the power storage device element being housed in a package formed of the power storage device packaging material according to any one of items 1 to 5.
Item 7. A method for producing a power storage device packaging material, comprising the step of:

laminating at least a base material layer, a barrier layer, and a heat-sealable resin layer in this order to provide a laminate,
wherein the base material layer contains a polyester film, and
the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less.

Reference Signs List

1: base material layer
2: adhesive agent layer
3: barrier layer
4: heat-sealable resin layer
5: adhesive layer
6: surface coating layer
10: power storage device packaging material

## Claims

**1.** A power storage device packaging material comprising a laminate comprising at least a base material layer, a barrier layer, and a heat-sealable resin layer in this order,

wherein the base material layer contains a polyester film, and
the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less.

**2.** The power storage device packaging material according to claim 1, wherein the polyester film has a thickness of 5 μm or more and 40 μm or less.

**3.** The power storage device packaging material according to claim 1 or 2, wherein the polyester film has a melting point of 235°C or more.

**4.** The power storage device packaging material according to any one of claims 1 to 3, wherein the polyester film has a degree of crystallinity of 15% or more and 40% or less.

**5.** The power storage device packaging material according to any one of claims 1 to 4, wherein the polyester film has a rupture elongation of 100% or more in at least one of the longitudinal and width directions.

**6.** A power storage device comprising a power storage device element comprising at least a positive electrode, a negative electrode, and an electrolyte, the power storage device element being housed in a package formed of the power storage device packaging material according to any one of claims 1 to 5.

**7.** A method for producing a power storage device packaging material, comprising the step of:

laminating at least a base material layer, a barrier layer, and a heat-sealable resin layer in this order to provide a laminate,

wherein the base material layer contains a polyester film, and

the polyester film has a work hardening exponent of 1.6 or more and 3.0 or less in both longitudinal and width directions, with a difference of 0.5 or less between the work hardening exponents in the longitudinal and width directions, an intrinsic viscosity of 0.66 or more and 0.95 or less, and a rigid amorphous fraction of 28% or more and 60% or less.

FIG. 1

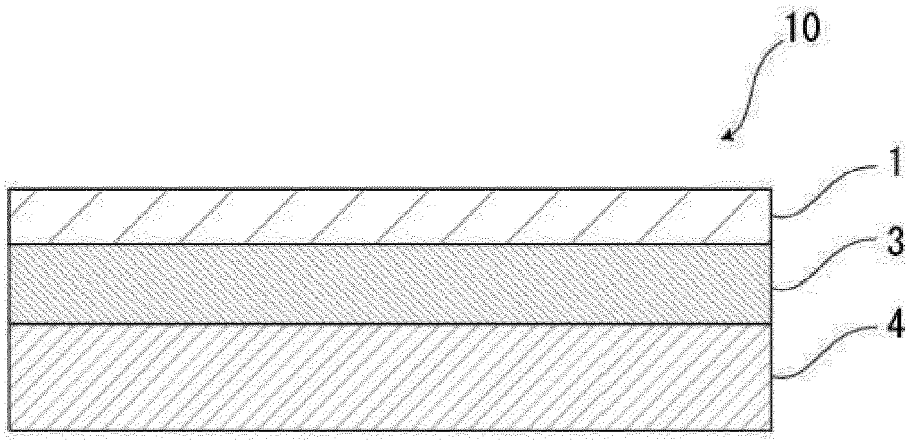


FIG. 2

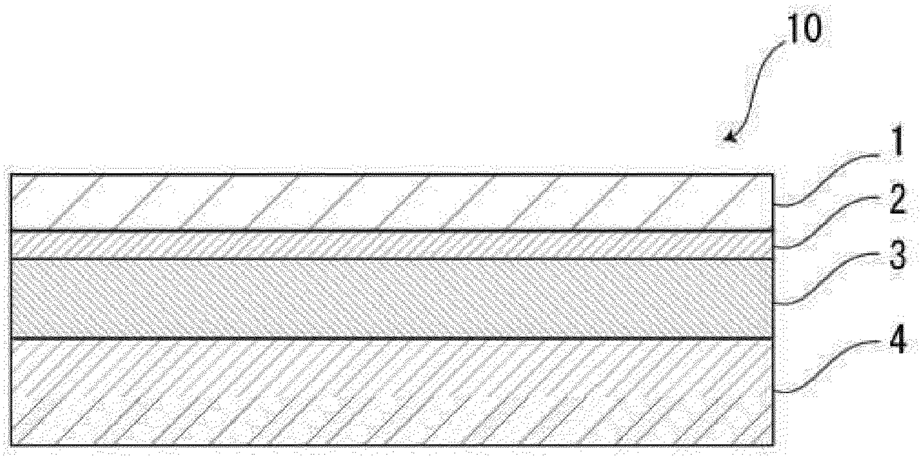


FIG. 3

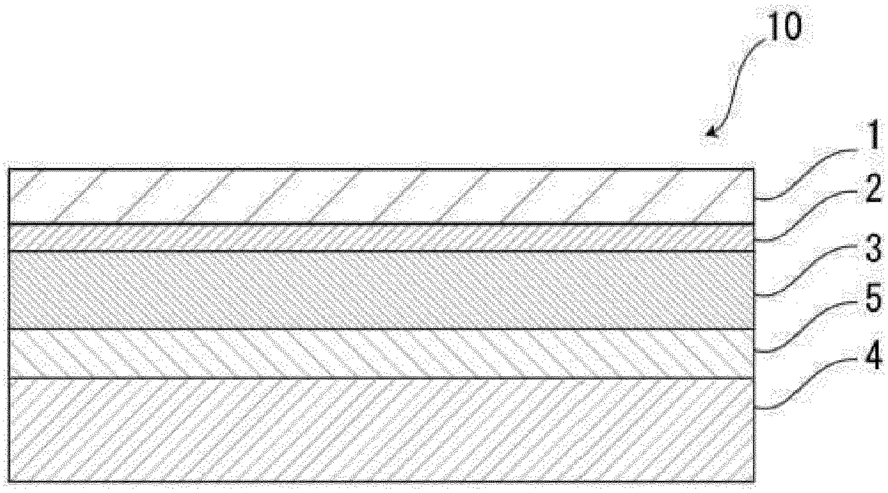

FIG. 4

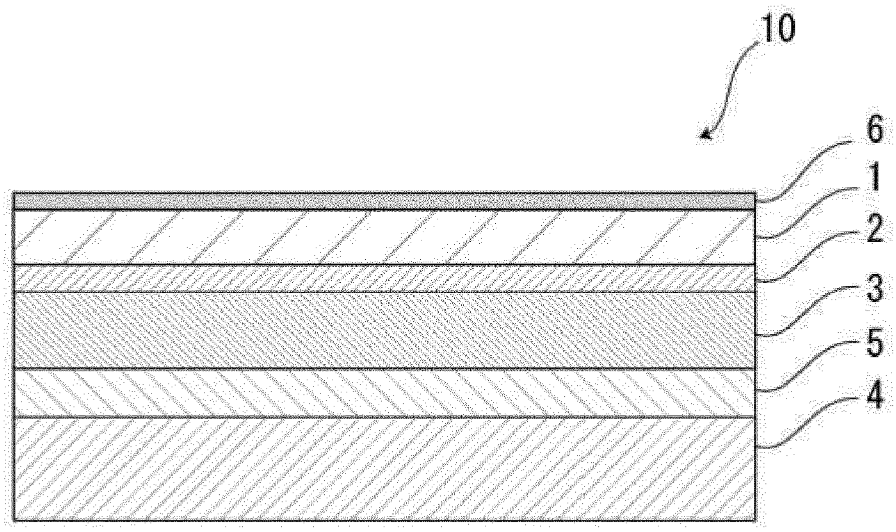


FIG. 5

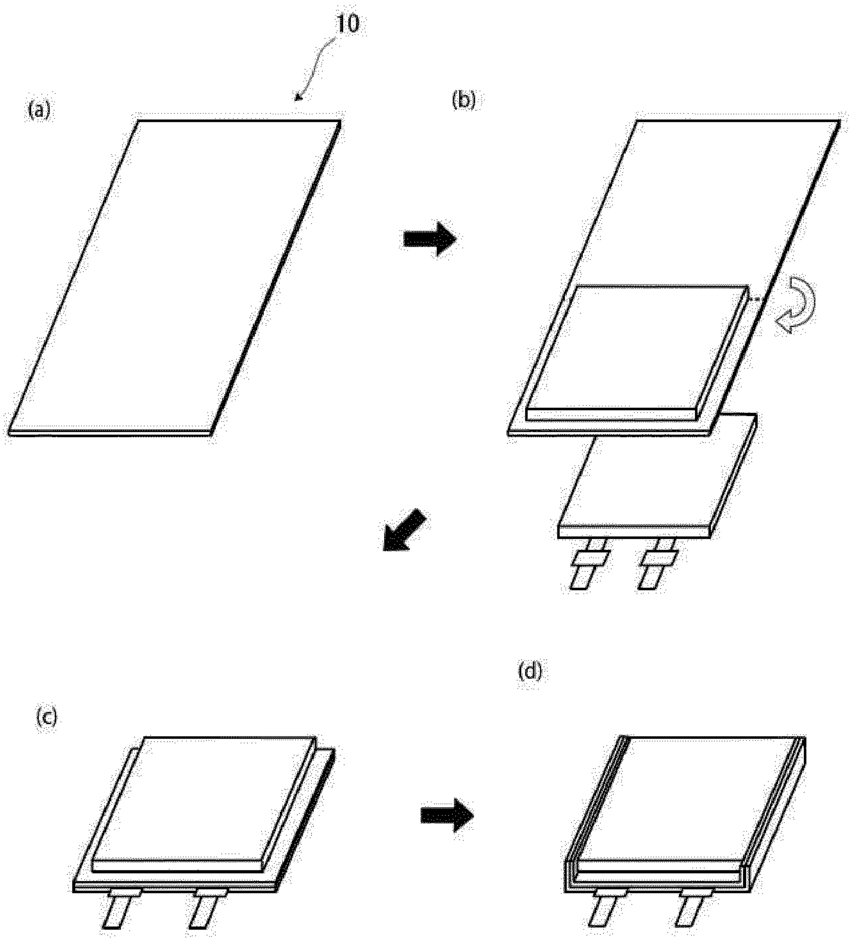

**INTERNATIONAL SEARCH REPORT**

International application No.
**PCT/JP2021/036342**

**A. CLASSIFICATION OF SUBJECT MATTER**

***H01M 50/121***(2021.01)i; ***B32B 27/36***(2006.01)i; ***H01G 11/78***(2013.01)i; ***H01G 11/84***(2013.01)i; ***H01M 50/105***(2021.01)i; ***H01M 50/129***(2021.01)i; *H01M 50/119*(2021.01)n
FI: H01M50/121; B32B27/36; H01G11/78; H01G11/84; H01M50/105; H01M50/129; H01M50/119

According to International Patent Classification (IPC) or to both national classification and IPC

**B. FIELDS SEARCHED**

Minimum documentation searched (classification system followed by classification symbols)

H01M50/121; B32B27/36; H01G11/78; H01G11/84; H01M50/105; H01M50/129; H01M50/119

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-131888 A (TORAY INDUSTRIES) 23 July 2015 (2015-07-23) | 1-7 |
| A | JP 2017-177412 A (TORAY INDUSTRIES) 05 October 2017 (2017-10-05) | 1-7 |
| A | WO 2017/170333 A1 (TOYOBO CO., LTD.) 05 October 2017 (2017-10-05) | 1-7 |
| A | JP 2014-233950 A (TORAY INDUSTRIES) 15 December 2014 (2014-12-15) | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2021** | **09 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/036342**

| Patent document cited in search report | Publication date (day/month/year) | Patent family member(s) | Publication date (day/month/year) |
|---|---|---|---|
| JP 2015-131888 A | 23 July 2015 | (Family: none) | |
| JP 2017-177412 A | 05 October 2017 | (Family: none) | |
| WO 2017/170333 A1 | 05 October 2017 | TW 201806211 A | |
| JP 2014-233950 A | 15 December 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008287971 A